(19) Europäisches Patentamt
European Patent Office
Office européen des brevets

(11) EP 4 206 797 A1

(12) EUROPEAN PATENT APPLICATION
published in accordance with Art. 153(4) EPC

(43) Date of publication:
**05.07.2023 Bulletin 2023/27**

(21) Application number: **20951371.2**

(22) Date of filing: **25.08.2020**

(51) International Patent Classification (IPC):
***G02C 7/04*** *(2006.01)*

(52) Cooperative Patent Classification (CPC):
**G02C 7/04**

(86) International application number:
**PCT/JP2020/032014**

(87) International publication number:
**WO 2022/044117 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Menicon Co., Ltd.**
**Nagoya-shi, Aichi 460-0006 (JP)**

(72) Inventors:
- **SATAKE Kohsuke**
  **Kasugai-shi, Aichi 487-0032 (JP)**
- **NISHIGUCHI Yuka**
  **Kasugai-shi, Aichi 487-0032 (JP)**
- **SATAKE Yurika**
  **Kasugai-shi, Aichi 487-0032 (JP)**

(74) Representative: **Plasseraud IP**
**66, rue de la Chaussée d'Antin**
**75440 Paris Cedex 09 (FR)**

# (54) OPHTHALMIC LENS

(57) The present invention provides an ocular lens which achieves both of oxygen permeability and surface hydrophilicity, and on which the deposition of lipids is suppressed. The ocular lens of the present invention includes a polymer material obtained by polymerizing a polymerizable composition containing, as monomer components, a siloxane monomer having a siloxane bond, and a siloxane-free crosslinkable monomer free of any siloxane bond, wherein the siloxane-free crosslinkable monomer includes an alkylene glycol chain-containing crosslinkable monomer having: a chain moiety containing 6 or more alkylene glycol repeating units; and polymerizable groups arranged at both terminals of the chain moiety.

## Description

### Technical Field

The present invention relates to an ocular lens.

### Background Art

Contact lenses are broadly classified into hard contact lenses and soft contact lenses. In recent years, many of the hard contact lenses have had high oxygen permeability by being formed through use of a siloxane polymer having a siloxane bond (Si-O-Si), but have caused foreign body sensation when worn owing to their hardness in some cases. Meanwhile, the soft contact lenses provide excellent wearing comfort by being formed from a water-containing hydrogel using a polymer copolymerized from a hydrophilic monomer and a (meth)acrylic monomer serving as copolymerization components, but tend to have low oxygen permeability as compared to the hard contact lenses. To deal with this, a contact lens achieving both of high oxygen permeability and excellent wearing comfort has been developed through use of a silicone hydrogel containing a siloxane monomer as a further copolymerization component (Patent Literature 1).

However, the contact lens formed from the silicone hydrogel is liable to have lipids deposited on its surface. Accordingly, it is desired that a contact lens which achieves both of high oxygen permeability and excellent wearing comfort, and on which the deposition of lipids is suppressed be attained.

### Citation List

### Patent Literature

[PTL 1] JP 6433790 B2

### Summary of Invention

### Technical Problem

A primary object of the present invention is to provide an ocular lens which achieves both of oxygen permeability and wearing comfort, and on which the deposition of lipids is suppressed.

### Solution to Problem

According to one aspect of the present invention, there is provided an ocular lens, including a polymer material obtained by polymerizing a polymerizable composition containing, as monomer components, a siloxane monomer having a siloxane bond, and a siloxane-free crosslinkable monomer free of any siloxane bond, wherein the siloxane-free crosslinkable monomer includes an alkylene glycol chain-containing crosslinkable monomer having: a chain moiety containing 6 or more alkylene glycol repeating units; and polymerizable groups arranged at both terminals of the chain moiety.

In one embodiment, the chain moiety of the alkylene glycol chain-containing crosslinkable monomer contains 6 to 50 alkylene glycol repeating units.

In one embodiment, the alkylene glycol repeating units include at least one kind selected from the group consisting of: an ethylene glycol repeating unit; a propylene glycol repeating unit; and a butylene glycol repeating unit.

In one embodiment, the polymerizable composition further contains a hydrophilic polymer.

In one embodiment, a blending ratio of the siloxane-free crosslinkable monomer with respect to a total blending amount of all monomer components and, if present, the hydrophilic polymer in the polymerizable composition is 2 wt% or more, and a blending ratio of the alkylene glycol chain-containing crosslinkable monomer with respect to the total blending amount of all monomer components and, if present, the hydrophilic polymer in the polymerizable composition is 0.9 wt% or more.

In one embodiment, a blending ratio of the alkylene glycol chain-containing crosslinkable monomer with respect to a total blending amount of all monomer components and, if present, the hydrophilic polymer in the polymerizable composition is 2 wt% or more.

In one embodiment, a blending ratio of the alkylene glycol chain-containing crosslinkable monomer with respect to a total blending amount of all monomer components and, if present, the hydrophilic polymer in the polymerizable composition is from 3 wt% to 25 wt%.

In one embodiment, the alkylene glycol chain-containing crosslinkable monomer has an HLB value of from 5

to 20.

In one embodiment, a blending ratio of the siloxane monomer with respect to a total blending amount of all monomer components and, if present, the hydrophilic polymer in the polymerizable composition is from 10 wt% to 70 wt%.

In one embodiment, the siloxane monomer has a single polymerizable group.

In one embodiment, a number of repetitions of the siloxane bond that the siloxane monomer has is 100 or less.

In one embodiment, a number of repetitions of the siloxane bond that the siloxane monomer has is 20 or less.

In one embodiment, the siloxane monomer has a weight average molecular weight of 10,000 or less.

In one embodiment, the siloxane monomer has a weight average molecular weight of 1,000 or less.

In one embodiment, the siloxane monomer includes a siloxane monomer A having a weight average molecular weight of 1,000 or less, and a siloxane monomer B having a weight average molecular weight of more than 1,000, and a ratio of the siloxane monomer B to a total of the siloxane monomer A and the siloxane monomer B is 20 wt% or less.

In one embodiment, the monomer component further contains a copolymerizable monomer.

In one embodiment, the copolymerizable monomer includes at least one kind of hydrophilic monomer selected from a hydroxyl group-containing alkyl (meth)acrylate, (meth)acrylamide, an N-vinyl lactam, an N-methyl lactam, a methyl (meth)acrylate, and an alkoxyalkyl (meth)acrylate.

In one embodiment, a blending ratio of the copolymerizable monomer with respect to a total blending amount of all monomer components and, if present, the hydrophilic polymer in the polymerizable composition is from 20 wt% to 70 wt%.

In one embodiment, the hydrophilic polymer contains at least one kind selected from poly-N-vinylpyrrolidone, a polyalkylene glycol, a polysaccharide, poly(meth)acrylic acid, and polyvinyl alcohol.

In one embodiment, the polymer material has a stress relaxation rate of from 10% to 40%.

In one embodiment, the polymer material has a Young's modulus of from 0.3 MPa to 2.3 MPa.

In one embodiment, the ocular lens is a contact lens.

## Effects of Invention

According to the present invention, the polymer material obtained by polymerizing the monomer components including the siloxane monomer and the specific crosslinkable monomer is used, and thus the ocular lens which achieves both of oxygen permeability and wearing comfort, and on which the deposition of lipids is suppressed can be obtained. In addition, the ocular lens obtained according to the present invention can have flexibility and deformation recoverability appropriate for securing satisfactory handleability.

## Brief Description of Drawings

FIG. 1 is a table showing evaluation results of ocular lenses obtained in Examples and Comparative Examples.

FIG. 2 is a view for illustrating a jig used in the measurement of a stress relaxation rate.

## Description of Embodiments

As used herein, the term "monomer" means a polymerizable compound having one or more polymerizable groups. The polymerizable group may be preferably exemplified by an ethylenically unsaturated group, and the polymerizable group may be, for example, a (meth)acryloyl group, a vinyl group, or an allyl group. Herein, the description "(meth)" means optional methyl substitution. Accordingly, the description "(meth)acryloyl" means methacryloyl and/or acryloyl. Other descriptions such as "(meth)acrylic" have similar meanings.

An ocular lens according to an embodiment of the present invention contains a polymer material obtained by polymerizing a polymerizable composition containing, as monomer components, a siloxane monomer having a siloxane bond, and a siloxane-free crosslinkable monomer free of any siloxane bond, and uses, as the siloxane-free crosslinkable monomer, at least an alkylene glycol chain-containing crosslinkable monomer having: a chain moiety containing 6 or more alkylene glycol repeating units; and polymerizable groups arranged at both terminals of the chain moiety. The ocular lens according to the embodiment of the present invention typically has a hemispherical shape following the curve of a cornea. The ocular lens according to the embodiment of the present invention may be used as, for example, a contact lens, an artificial cornea, or a corneal onlay, preferably a silicone hydrogel contact lens.

Embodiments of the present invention are specifically described below. However, the present invention is not limited to these embodiments. In addition, the respective embodiments may be combined with each other as appropriate.

A. Polymerizable Composition

The polymerizable composition contains, as monomer components, the siloxane monomer having a siloxane bond, and the siloxane-free crosslinkable monomer free of any siloxane bond, and the siloxane-free crosslinkable monomer includes the alkylene glycol chain-containing crosslinkable monomer having: a chain moiety containing 6 or more alkylene glycol repeating units; and polymerizable groups arranged at both terminals of the chain moiety. The monomer components preferably further include a copolymerizable monomer. In one embodiment, the copolymerizable monomer includes a hydrophilic monomer. In one embodiment, the copolymerizable monomer includes a compatibilizing monomer. In addition, the polymerizable composition may further contain a hydrophilic polymer. When the polymerizable composition containing the monomer components and the hydrophilic polymer is polymerized, there can be obtained a polymer material in which a polymer containing structural units derived from the monomer components and a hydrophilic polymer component are highly complexed with each other. In addition, the polymerizable composition may further contain any appropriate additive as required.

A-1. Monomer Components

The monomer components include the siloxane monomer and the siloxane-free crosslinkable monomer including the alkylene glycol chain-containing crosslinkable monomer, and preferably further include the copolymerizable monomer.

A-1-1. Siloxane Monomer

Any appropriate monomer may be used as the siloxane monomer as long as the monomer has a siloxane bond (Si-O-Si) and a polymerizable group. The siloxane monomer can impart high oxygen permeability to the polymer material as a result of having the siloxane bond. In one embodiment, the siloxane monomer may be a non-crosslinkable siloxane monomer having a single polymerizable group (in other words, having only one polymerizable group in the molecule). In another embodiment, the siloxane monomer may be a crosslinkable siloxane monomer having two or more polymerizable groups in the molecule. In the embodiments of the present invention, the siloxane monomers may be used alone or in combination thereof.

Examples of the siloxane monomer include monomers that have hitherto been used as materials for contact lenses, such as siloxane monomers described in paragraph 0039 to paragraph 0044 of JP 2015-503631 A, siloxane monomers described in paragraph 0060 to paragraph 0065 of JP 2014-40598 A, and siloxane monomers described in paragraph 0024 to paragraph 0037 of WO 2015/92858 A1 (specifically a siloxane monomer represented by the following formula (A), preferably the formula (A-1), (A-2), or (A-3)). Those publications are incorporated herein by reference in their entirety.

$$A^1\text{-}Z^1\text{-}U^1\text{-}Z^2\text{-}Z^3\text{-}(\text{-}S^1\text{-}U^2\text{-})_n\text{-}S^2\text{-}Z^4\text{-}Z^5\text{-}U^3\text{-}Z^6\text{-}A^2 \qquad \text{(A)}$$

The symbols in the general formula (A) are described below.

1) "n" represents 0 or an integer of from 1 to 10.

2) $A^1$ and $A^2$ represent groups represented by the following general formulae (A-II) and (A-III), respectively. In the following general formula (A-II) and general formula (A-III), $Y^{21}$ and $Y^{22}$ each independently represent an acryloyloxy group, a methacryloyloxy group, a vinyl group, or an allyl group, and $R^{21}$ and $R^{22}$ each independently represent a direct bond or a linear or branched alkylene group having 2 to 6 carbon atoms.

$$Y^{21}\text{-}R^{21}\text{-} \ldots \qquad \text{(A-II)}$$

$$\text{-}R^{22}\text{-}Y^{22} \ldots \qquad \text{(A-III)}$$

3) $Z^1$, $Z^2$, $Z^3$, $Z^4$, $Z^5$, and $Z^6$ each independently represent a direct bond or a polyalkylene glycol chain containing an alkylene glycol (oxyalkylene group) as a repeating unit. Provided that, at least one or more of $Z^1$ to $Z^6$ represent a polyethylene glycol chain in which the number of repetitions of ethylene glycol is 2 or more, preferably from 4 to 15, and at least one or more of $Z^1$ to $Z^6$ not representing the polyethylene glycol chain represent a polyalkylene glycol chain containing an alkylene glycol other than ethylene glycol as a repeating unit (e.g., a polypropylene glycol chain containing propylene glycol as a constituent unit, a specific example of which is a polypropylene glycol chain in which the number of repetitions of propylene glycol is from 5 to 16).

4) $U^1$ represents a group represented by the following general formula (A-IV), and contains a urethane bond in the molecular chain of the siloxane monomer. In the following general formula (A-IV), $E^{21}$ represents an -NHCO- group (in this case, $E^{21}$ forms a urethane bond with $X^{21}$) or a divalent group derived from a diisocyanate selected from the group consisting of saturated or unsaturated aliphatic, alicyclic, and aromatic diisocyanates (in this case, $E^{21}$ forms a urethane bond between $Z^1$ and $X^{21}$), and $X^{21}$ represents an oxygen atom.

$-E^{21}-X^{21}-$ ... (A-IV)

5) $U^2$ represents a group represented by the following general formula (A-VI), and contains a urethane bond in the molecular chain of the siloxane monomer. In the following general formula (A-VI), $R^{41}$ and $R^{42}$ each independently represent a linear or branched alkylene group having 2 to 6 carbon atoms, $X^{41}$ and $X^{42}$ each independently represent an oxygen atom or an alkylene glycol group, and $E^{41}$ represents a divalent group derived from a diisocyanate selected from the group consisting of saturated or unsaturated aliphatic, alicyclic, and aromatic diisocyanates (in this case, $E^{41}$ forms a urethane bond between $X^{41}$ and $X^{42}$).

$-R^{41}-X^{41}-E^{41}-X^{42}-R^{42}-$ ... (A-VI)

6) $U^3$ represents a group represented by the following general formula (A-VII), and contains a urethane bond in the molecular chain of the siloxane monomer. In the following general formula (A-VII), $X^{22}$ represents an oxygen atom, and $E^{22}$ represents an -NHCO- group (in this case, $E^{22}$ forms a urethane bond with $X^{22}$) or a divalent group derived from a diisocyanate selected from the group consisting of saturated or unsaturated aliphatic, alicyclic, and aromatic diisocyanates (in this case, $E^{22}$ forms a urethane bond between $Z^5$ and $X^{22}$).

$-X^{22}-E^{22}-$ ... (A-VII)

7) $S^1$ and $S^2$ each independently represent a group represented by the following general formula (A-V). In the following general formula (A-V), $R^{31}$ and $R^{38}$ each independently represent a linear or branched alkylene group having 2 to 6 carbon atoms, and $R^{32}$, $R^{33}$, $R^{34}$, $R^{35}$, $R^{36}$, and $R^{37}$ each independently represent an alkyl group having 1 to 6 carbon atoms, an alkyl group substituted with fluorine, or a phenyl group. In addition, K represents an integer of from 1 to 1,500, L represents 0 or an integer of from 1 to 1,500, and the sum of K and L: "K+L" is, for example, an integer of from 1 to 1,500, preferably an integer of from 2 to 1,000, more preferably an integer of from 3 to 500.

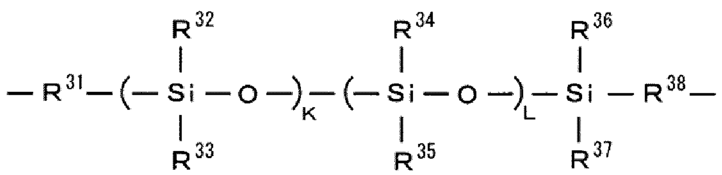

· · · (A-V)

General formula (A-1):

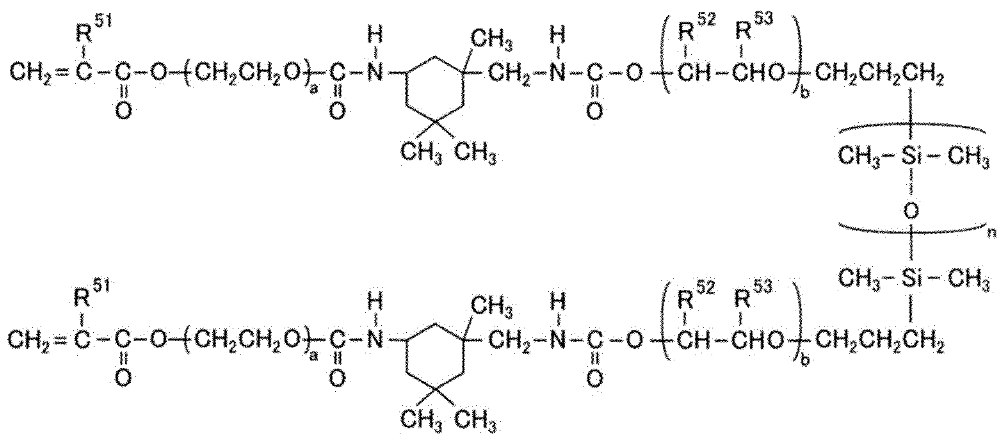

(In the formula, $R^{51}$ represents a hydrogen atom or a methyl group, "a" represents an integer of 2 or more, "b" represents an integer of 2 or more, and "n" represents an integer of from 1 to 1,500. In addition, $R^{52}$ and $R^{53}$ each represent a hydrogen atom or a methyl group. When $R^{52}$ represents a hydrogen atom, $R^{53}$ represents a methyl group, and when $R^{52}$ represents a methyl group, $R^{53}$ represents a hydrogen atom.)

General formula (A-2):

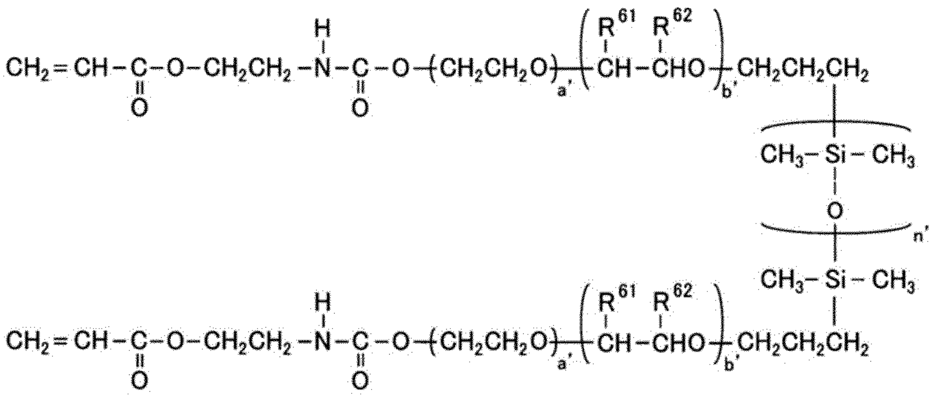

(In the formula, a' represents an integer of 2 or more, b' represents an integer of 2 or more, and n' represents an integer of from 1 to 1,500. In addition, $R^{61}$ and $R^{62}$ each represent a hydrogen atom or a methyl group. When $R^{61}$ represents a hydrogen atom, $R^{62}$ represents a methyl group, and when $R^{61}$ represents a methyl group, $R^{62}$ represents a hydrogen atom.)

General formula (A-3):

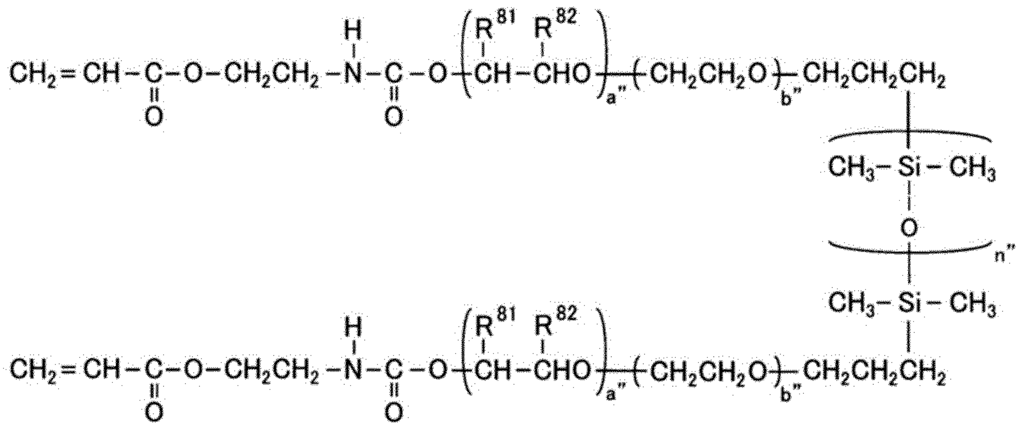

(In the formula, a" represents an integer of 2 or more, b" represents an integer of 2 or more, and n" represents an integer of from 1 to 1,500. In addition, $R^{81}$ and $R^{82}$ each represent a hydrogen atom or a methyl group. When $R^{81}$ represents a hydrogen atom, $R^{82}$ represents a methyl group, and when $R^{81}$ represents a methyl group, $R^{82}$ represents a hydrogen atom.)

Other specific examples of the siloxane monomer include: silicone-containing alkyl (meth)acrylates, such as trimethylsiloxydimethylsilylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy] bis(trimethylsiloxy)sily lpropyl (meth)acrylate, tris[methylbis(trimethylsiloxy)siloxy]silylpropyl (meth)acrylate, methylbis(trimethylsiloxy)silylpropylglyceryl (meth)acrylate, tris(trimethylsiloxy)silylpropylglyceryl (meth)acrylate, mono[methylbis(trimethylsiloxy)siloxy]bis(trimethylsiloxy)sily lpropylglyceryl (meth)acrylate, trimethylsilylethyltetramethyldisiloxypropylglyceryl (meth)acrylate, trimethylsilylmethyl (meth)acrylate, trimethylsilylpropylglyceryl (meth)acrylate, trimethylsilylpropyl (meth)acrylate, trimethylsiloxydimethylsilylpropylglyceryl (meth)acrylate, methylbis(trimethylsiloxy)silylethyltetramethyldisiloxymethyl (meth)acrylate, tetramethyltriisopropylcyclotetrasiloxanylpropyl (meth)acrylate, and

tetramethyltriisopropylcyclotetrasiloxybis(trimethylsiloxy)sil ylpropyl (meth)acrylate; silicone-containing styrene derivatives, such as tris(trimethylsiloxy)silylstyrene, bis(trimethylsiloxy)methylsilylstyrene, (trimethylsiloxy)dimethylsilylstyrene, tris(trimethylsiloxy)siloxydimethylsilylstyrene, [bis(trimethylsiloxy)methylsiloxy]dimethylsilylstyrene, (trimethylsiloxy)dimethylsilylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, trimethylsiloxypentamethyldisiloxymethylsilylstyrene, tris(pentamethyldisiloxy)silylstyrene, tris(trimethylsiloxy)siloxybis(trimethylsiloxy)silylstyrene, bis(heptamethyltrisiloxy)methylsilylstyrene, tris[methylbis(trimethylsiloxy)siloxy]silylstyrene, heptakis(trimethylsiloxy)trisilylstyrene, trimethylsiloxybis[tris(trimethylsiloxy)siloxy]silylstyrene, nonamethyltetrasiloxyundecylmethylpentasiloxymethylsilylstyren e, tris[tris(trimethylsiloxy)siloxy]silylstyrene, (tristrimethylsiloxyhexamethyl)tetrasiloxy[tris(trimethylsilox y)siloxy]trimethylsiloxysilylstyrene, nonakis(trimethylsiloxy)tetrasilylstyrene, bis(tridecamethylhexasiloxy)methylsilylstyrene, heptamethylcyclotetrasiloxanylstyrene, heptamethylcyclotetrasiloxybis(trimethylsiloxy)silylstyrene, tripropyltetramethylcyclotetrasiloxanylstyrene, and trimethylsilylstyrene; and silicone-containing fumaric acid diesters, such as bis(3-(trimethylsilyl)propyl) fumarate, bis(3-(pentamethyldisiloxanyl)propyl) fumarate, and bis(tris(trimethylsiloxy)silylpropyl) fumarate.

Still other specific examples of the siloxane monomer include mono(meth)acryloyloxypropyl-terminated mono-n-butyl-terminated polydimethylsiloxane, mono(meth)acryloyloxypropyl-terminated mono-n-methyl-terminated polydimethylsiloxane, mono(meth)acryloyloxypropyl-terminated mono-n-butyl-terminated polydiethylsiloxane, mono(meth)acryloyloxypropyl-terminated mono-n-methyl-terminated polydiethylsiloxane, mono(meth)acryloylaminopropyl-terminated mono-n-butyl-terminated polydimethylsiloxane, mono(meth)acryloylaminopropyl-terminated mono-n-methyl-terminated polydimethylsiloxane, mono(meth)acryloylaminopropyl-terminated mono-n-butyl-terminated polydiethylsiloxane, and mono(meth)acryloylaminopropyl-terminated mono-n-methyl-terminated polydiethylsiloxane. In those siloxane monomers, the number of repetitions of (Si-O) may be, for example, from 4 to 20, preferably from 4 to 12, more preferably from 4 to 10.

In one embodiment, a siloxane monomer containing a nitrogen atom is used. The presence of nitrogen atom in siloxane monomer improves its compatibility with a hydrophilic monomer, and as a result, a silicone hydrogel with excellent transparency can be obtained even when the blending ratio of the siloxane monomer is increased.

In one embodiment, a siloxane monomer free of any hydrophilic group and a siloxane monomer having a hydrophilic group may be used in combination. When such two kinds of siloxane monomers are used in combination, the compatibility with a hydrophilic monomer is improved, and as a result, a silicone hydrogel with excellent transparency can be obtained irrespective of the presence or absence of a compatibilizing monomer.

Examples of the hydrophilic group include a hydroxyl group, a carboxyl group, a sulfonic acid group, and a phosphoric acid group. Of those, a siloxane monomer having a hydroxyl group is preferred. An example of the siloxane monomer having a hydroxyl group is (3-methacryloxy-2-hydroxypropyloxy)propylbis(trimethylsiloxy)methylsilane (SiGMA).

The weight average molecular weight of the siloxane monomer is typically 10,000 g/mol or less. In one embodiment, a siloxane monomer having a weight average molecular weight of, for example, 1,000 g/mol or less, preferably from 200 g/mol to 900 g/mol, more preferably from 300 g/mol to 800 g/mol may be preferably used. When such siloxane monomer is used, the viscosity of the polymerizable composition as a whole can be reduced to facilitate its handling at the time of, for example, dispensing into a mold. In addition, in another embodiment, a siloxane monomer having a weight average molecular weight of, for example, more than 1,000 g/mol and 10,000 g/mol or less, preferably from 2,000 g/mol to 9,000 g/mol, more preferably from 3,000 g/mol to 8,000 g/mol may be preferably used. When such siloxane monomer is used, a higher oxygen permeability-improving effect can be obtained. Those siloxane monomers may be used alone or in combination of both. When those two kinds of siloxane monomers are used in combination, high oxygen permeability can be expressed while an appropriate viscosity of the polymerizable composition is maintained.

The number of repetitions of the siloxane bond that the siloxane monomer has is typically 1,500 or less, preferably 100 or less. In one embodiment, a siloxane monomer having a number of repetitions of the siloxane bond of, for example, from 1 to 20, preferably from 2 to 20, more preferably from 3 to 12, still more preferably from 4 to 10 may be preferably used. When such siloxane monomer is used, the viscosity of the polymerizable composition as a whole can be reduced to facilitate its handling at the time of, for example, dispensing into a mold. In addition, in another embodiment, a siloxane monomer having a number of repetitions of the siloxane bond of, for example, more than 20 and 1,500 or less, preferably more than 20 and 100 or less, more preferably more than 20 and 80 or less may be preferably used. When such siloxane monomer is used, a higher oxygen permeability-improving effect can be obtained. Those siloxane monomers may be used alone or in combination of both. When those two kinds of siloxane monomers are used in combination, high oxygen permeability can be expressed while an appropriate viscosity of the polymerizable composition is maintained. In those embodiments, a polysiloxane structure contained in the siloxane monomer may be linear or branched. In addition, herein, a siloxane monomer containing more than 20 siloxane bonds or a siloxane monomer having a weight average molecular weight of more than 1,000 g/mol is sometimes referred to as "siloxane macromonomer".

The blending ratio of the siloxane monomer (when two or more kinds of siloxane monomers are used, their total blending ratio) may be set to, for example, from 10 wt% to 70 wt%, preferably from 15 wt% to 65 wt%, more preferably from 20 wt% to 60 wt% with respect to the total blending amount of all monomer components and, if present, the hydrophilic polymer in the polymerizable composition. When the blending ratio of the siloxane monomer falls within the ranges, a polymer material having high oxygen permeability can be obtained.

When a siloxane macromonomer (e.g., the siloxane monomer represented by the formula (A)) is used in combination with any other siloxane monomer, the blending ratio of the siloxane macromonomer may be set to preferably 20 wt% or less, more preferably from 5 wt% to 15 wt% with respect to all siloxane monomers (total of the siloxane macromonomer and the other siloxane monomer).

When a siloxane monomer having a hydrophilic group and a siloxane monomer free of any hydrophilic group are used in combination, the blending ratio of the siloxane monomer having a hydrophilic group may be set to preferably from 1 wt% to 60 wt%, more preferably from 5 wt% to 50 wt% with respect to all siloxane monomers (total of the siloxane monomer having a hydrophilic group and the siloxane monomer free of any hydrophilic group).

A-1-2. Siloxane-free Crosslinkable Monomer

The siloxane-free crosslinkable monomer is free of any siloxane bond, and has two or more polymerizable groups. In the embodiment of the present invention, one feature lies in using, as the siloxane-free crosslinkable monomer, the alkylene glycol chain-containing crosslinkable monomer having: a chain moiety containing 6 or more alkylene glycol repeating units; and polymerizable groups arranged at both terminals of the chain moiety. As required, a crosslinkable monomer other than the alkylene glycol chain-containing crosslinkable monomer (hereinafter sometimes referred to as "second crosslinkable monomer") may be further used as the siloxane-free crosslinkable monomer.

The blending ratio of the siloxane-free crosslinkable monomer (when two or more kinds of siloxane-free crosslinkable monomers are used, their total blending ratio) may be set to, for example, 2 wt% or more, preferably 2.2 wt% or more, more preferably from 3 wt% to 25 wt%, still more preferably from 3 wt% to 20 wt% with respect to the total blending amount of all monomer components and, if present, the hydrophilic polymer in the polymerizable composition.

A-1-2-1. Alkylene Glycol Chain-containing Crosslinkable Monomer

The alkylene glycol chain-containing crosslinkable monomer has a chain moiety containing 6 or more alkylene glycol repeating units, and polymerizable groups arranged at both terminals of the chain moiety. When a crosslinkable monomer has a structure in which polymerizable groups are arranged at both terminals of a relatively long polyether chain, through formation of hydrophilic network structure by the polyether chain, a polymer network structure capable of maintaining oxygen permeability and suppressing the entry of hydrophobic molecules such as lipids is formed. As a result, it is presumed that, there is obtained a polymer material which achieves both of oxygen permeability and surface hydrophilicity, and on which the deposition of lipids is suppressed. In the embodiment of the present invention, the alkylene glycol chain-containing crosslinkable monomers may be used alone or in combination thereof.

The hydrophilic-lipophilic balance (HLB) of the alkylene glycol chain-containing crosslinkable monomer is preferably from 5 to 20, more preferably from 5.5 to 18, still more preferably from 6 to 15. When the HLB falls within the ranges, compatibility with the siloxane monomer can be excellent. Herein, the HLB of the alkylene glycol chain-containing crosslinkable monomer is a value calculated on the basis of the following equation through use of Davies' method (where the group number of (EO) is 0.33, the group number of (PO) is -0.15, and the total group number of terminal methacrylic groups is 0.1).

$$\text{HLB} = 7 + \Sigma(\text{group numbers of hydrophilic groups}) + \Sigma(\text{group numbers of lipophilic groups})$$

In one embodiment, the alkylene glycol chain-containing crosslinkable monomer may be represented by the following formula (1).

$$P^1\text{-}X\text{-}(A^1O)_{m1}\text{-}[L^1\text{-}(A^2O)_{m2}]_{n1}\text{-}[L^2\text{-}(A^3O)_{m3}]_{n2}\text{-}Z\text{-}P^2 \qquad (1)$$

(where:

$P^1$ and $P^2$ represent polymerizable groups that may be identical to or different from each other;
$A^1O$, $A^2O$, and $A^3O$ represent alkylene glycol repeating units that may be identical to or different from each other;

X represents a single bond, -O-, -NH-, -O-$CH_2CH_2$-NH-CO-O-, or -O-$CH_2CH(OH)CH_2O$-;
Z represents a single bond, -NH-, -$CH_2CH_2$-NH-CO-O-, or - $CH_2CH(OH)CH_2O$-;
$L^1$ and $L^2$ each independently represent a single bond or a divalent linking group;
n1 and n2 each independently represent 0 or 1; and
m1 and m2 and m3 each independently represent an integer of 1 or more,
provided that a relationship of $m1+m2\times n1+m3\times n2\geq 6$ is satisfied.)

In the formula (1), the polymerizable group set forth in each of $P^1$ and $P^2$ is preferably a (meth)acryloyl group, a vinyl group, or an allyl group, more preferably a (meth)acryloyl group.
In the formula (1), the linking group set forth in each of $L^1$ and $L^2$ is, as described above, a single bond or a divalent linking group. An example of the divalent linking group is a linear or branched alkylene group having 1 to 5 carbon atoms. The linking group set forth in each of $L^1$ and $L^2$ is preferably a single bond.
In the formula (1), the chain moiety set forth in - $(A^1O)_{m1}$-$[L^1$-$(A^2O)_{m2}]_{n1}$-$[L^2$-$(A^3O)_{m3}]_{n2}$- contains 6 or more alkylene glycol repeating units. The number of alkylene glycol repeating units contained in the chain moiety ($m1+m2\times n1+m3\times n2$) is preferably from 6 to 50, more preferably from 6 to 40, still more preferably from 6 to 30, even more preferably from 6 to 25, even more preferably from 7 to 20. The number of alkylene glycol repeating units contained in the chain moiety may be, for example, 8 or more, or 9 or more. When the number of repetitions falls within the ranges, an excellent preventive effect on the deposition of lipids can be obtained.
The alkylene glycol repeating units may be intermittently arranged, or consecutively arranged, in the chain moiety. The chain moiety contains preferably 6 or more, more preferably 6 to 50, still more preferably 6 to 40, even more preferably 6 to 30, even more preferably 6 to 25, even more preferably 7 to 20 consecutive alkylene glycol repeating units. The number of consecutive repeating units in the chain moiety may be, for example, 8 or more, or 9 or more.
As the alkylene glycol repeating units contained in the chain moiety ($A^1O$, $A^2O$, or $A^3O$ in the formula (1)), an alkylene glycol repeating unit having 5 or less carbon atoms is preferred, an ethylene glycol repeating unit (EO), a propylene glycol (typically propane-1,2-diol) repeating unit (PO), and a butylene glycol (typically 1,3-butanediol or 1,4-butanediol) repeating unit (BO) are more preferred, and an ethylene glycol repeating unit and a propylene glycol repeating unit are still more preferred. The chain moiety may contain only one kind of the alkylene glycol repeating units, or may contain two or more kinds thereof. That is, in the formula (1), $A^1O$, $A^2O$, and $A^3O$ may represent alkylene glycol repeating units different from each other, or may represent the same alkylene glycol repeating unit.
Specific examples of the alkylene glycol chain-containing crosslinkable monomer include polyethylene glycol di(meth)acrylate, polypropylene glycol di(meth)acrylate, polybutylene glycol di(meth)acrylate, polyethylene glycol-polypropylene glycol di(meth)acrylate, polyethylene glycol-polybutylene glycol di(meth)acrylate, polypropylene glycol-polybutylene glycol di(meth)acrylate, and polyethylene glycol-polypropylene glycol-polyethylene glycol-di(meth)acrylate.
In the formula (1), a configuration in which the alkylene glycol repeating units form a block structure is shown. However, when the alkylene glycol chain-containing crosslinkable monomer contains two or more kinds of alkylene glycol repeating units, each repeating units may be randomly arranged.
The blending ratio of the alkylene glycol chain-containing crosslinkable monomer (when two or more kinds of alkylene glycol chain-containing crosslinkable monomers are used, their total blending ratio) is, for example, 0.9 wt% or more, or for example, 1 wt% or more, preferably 2 wt% or more, more preferably from 3 wt% to 25 wt%, still more preferably from 3 wt% to 20 wt% with respect to the total blending amount of all monomer components and, if present, the hydrophilic polymer in the polymerizable composition. In addition, the blending ratio of the alkylene glycol chain-containing crosslinkable monomer with respect to all monomer components is, for example, from 2 mol% to 15 mol%, preferably from 4 mol% to 12 mol%, more preferably from 7 mol% to 10 mol%. When the polymerizable composition containing the alkylene glycol chain-containing crosslinkable monomer at such blending ratio is used, there can be suitably obtained a polymer material which achieves both of oxygen permeability and surface hydrophilicity, and on which the deposition of lipids is suppressed.

A-1-2-2. Second Crosslinkable Monomer

Any appropriate siloxane-free crosslinkable monomer other than the alkylene glycol chain-containing crosslinkable monomer may be used as the second crosslinkable monomer. Specific examples of the second crosslinkable monomer include butanediol di(meth)acrylate, ethylene glycol di(meth)acrylate, diethylene glycol di(meth)acrylate, triethylene glycol di(meth)acrylate, propylene glycol di(meth)acrylate, dipropylene glycol di(meth)acrylate, diallyl fumarate, allyl (meth)acrylate, vinyl (meth)acrylate, trimethylolpropane tri(meth)acrylate, methacryloyloxyethyl (meth)acrylate, divinylbenzene, diallyl phthalate, diallyl adipate, triallyl diisocyanate, $\alpha$-methylene-N-vinylpyrrolidone, 4-vinylbenzyl (meth)acrylate, 3-vinylbenzyl (meth)acrylate, 2,2-bis((meth)acryloyloxyphenyl)hexafluoropropane, 2,2-bis((meth)acryloyloxyphenyl)propane, 1,4-bis(2-(meth)acryloyloxyhexafluoroisopropyl)benzene, 1,3-bis(2-(meth)acryloyloxyhexafluoroisopropyl)benzene, 1,2-bis(2-(meth)acryloyloxyhexafluoroisopropyl)benzene, 1,4-bis(2-(meth)acryloyloxyisopropyl)benzene, 1,3-bis(2-(meth)acryloyloxyisopropyl)benzene, and 1,2-bis(2-(meth)acryloyloxyisopropyl)benzene. The second crosslinkable monomers may be used alone or in combination thereof.

The blending ratio of the second crosslinkable monomer (when two or more kinds of second crosslinkable monomers are used, their total blending ratio) may be selected so that the total blending ratio of the second crosslinkable monomer and the alkylene glycol chain-containing crosslinkable monomer is, for example, 2 wt% or more, more preferably 2.2 wt% or more, still more preferably from 3 wt% to 25 wt%, even more preferably from 3 wt% to 20 wt% with respect to the total blending amount of all monomer components and, if present, the hydrophilic polymer in the polymerizable composition. The blending ratio of the second crosslinkable monomer alone in the polymerizable composition may be, for example, from 0.1 wt% to 10 wt%, or for example, from 0.5 wt% to 5 wt% with respect to the total blending amount of all monomer components and, if present, the hydrophilic polymer in the polymerizable composition.

A-1-3. Copolymerizable Monomer

A monomer having a single polymerizable group and being free of any siloxane bond is used as the copolymerizable monomer. Specific examples of the copolymerizable monomer include a hydrophilic monomer, a compatibilizing monomer, and a functional monomer.

The blending ratio of the copolymerizable monomer is, for example, from 20 wt% to 70 wt%, preferably from 25 wt% to 65 wt%, more preferably from 30 wt% to 65 wt% with respect to the total blending amount of all monomer components and, if present, the hydrophilic polymer in the polymerizable composition. In addition, the total blending ratio of the siloxane monomer, the alkylene glycol chain-containing crosslinkable monomer, the hydrophilic monomer, and the compatibilizing monomer with respect to the total blending amount of all monomer components and, if present, the hydrophilic polymer is, for example, 80 wt% or more, preferably 90 wt% or more, more preferably 94 wt% or more, and its upper limit may be 100 wt%, or may be, for example, 99.99 wt% or less, or for example, 99 wt% or less. In addition, the total blending ratio of the siloxane monomer, the alkylene glycol chain-containing crosslinkable monomer, the hydrophilic monomer, and the compatibilizing monomer with respect to all monomer components is, for example, 90 wt% or more, preferably 95 wt% or more, more preferably 97 wt% or more, and its upper limit may be 100 wt%, or may be, for example, 99.99 wt% or less, or for example, 99 wt% or less.

A-1-3-1. Hydrophilic Monomer

The hydrophilic monomer can increase the hydrophilicity of the polymer material to be obtained. For example, a monomer having a solubility in water at 20°C of 0.03 g/mL or more, preferably 0.1 g/mL or more (excluding a monomer containing a silicon atom, and a monomer having two or more polymerizable groups) is used as the hydrophilic monomer.

Specific examples of the hydrophilic monomer include: hydroxy group-containing alkyl (meth)acrylates (e.g., hydroxy group-containing alkyl (meth)acrylates each having an alkyl group having 1 to 5 carbon atoms), such as hydroxyethyl (meth)acrylate, hydroxypropyl (meth)acrylate, dihydroxypropyl (meth)acrylate, and glycerol mono(meth)acrylate; (meth)acrylamides (e.g., alkyl(meth)acrylamides each having an alkyl group having 1 to 5 carbon atoms), such as N,N-dimethyl(meth)acrylamide, N-ethyl(meth)acrylamide, N-2-hydroxyethyl(meth)acrylamide, N-isopropyl(meth)acrylamide, and N-acryloylmorpholine; N-vinyllactams, such as N-vinylpyrrolidone, N-vinylpiperidone, and N-vinylcaprolactam; N-methyllactams such as 1-methyl-3-methylene-2-pyrrolidinone, and methyl (meth)acrylate; and alkoxyalkyl (meth)acrylates each having an alkoxyalkyl group having 2 to 4 carbon atoms. Of those, for example, 2-hydroxyethyl (meth)acrylate, N,N-dimethyl(meth)acrylamide, N-vinylpyrrolidone, methoxyethyl acrylate, ethyl acrylate, and glycerol mono(meth)acrylate are preferably used. The hydrophilic monomers may be used alone or as a mixture thereof.

The blending ratio of the hydrophilic monomer in the polymerizable composition (when two or more kinds of hydrophilic monomers are used, their total blending ratio) is, for example, from 10 wt% to 70 wt%, preferably from 22 wt% to 65 wt%, more preferably from 25 wt% to 60 wt% with respect to the total blending amount of all monomer components and, if present, the hydrophilic polymer in the polymerizable composition. When the blending ratio of the hydrophilic monomer falls within the ranges, a polymer material having a high water content and high surface hydrophilicity can be obtained.

A-1-3-2. Compatibilizing Monomer

The compatibilizing monomer can improve compatibility between the siloxane monomer and the hydrophilic monomer and/or the hydrophilic polymer. It is preferred to use, as the compatibilizing monomer, a monomer having a hydrogen bonding proton-containing group and being free of any silicon atom, the monomer having four or more carbon atoms other than carbon atoms contained in a polymerizable group.

The number of carbon atoms that the compatibilizing monomer has (excluding carbon atoms contained in a polymerizable group) is, for example, 6 or more, preferably from 6 to 25, more preferably from 7 to 15, still more preferably

from 8 to 13. The compatibilizing monomer may have, for example, 4 or more carbon atoms, more preferably 5 to 15, still more preferably 8 to 13 carbon atoms, per hydrogen bonding proton-containing group.

Examples of the hydrogen bonding proton-containing group include a hydroxyl group, a carboxyl group, an amino group, an amide group, a sulfonic acid group ($-SO_3H$), a urethane bond, and a urea bond. Of those, a hydroxyl group is preferred. The number of hydrogen bonding proton-containing groups that the compatibilizing monomer has is, for example, from 1 to 12, preferably from 1 to 5, more preferably from 1 to 3, still more preferably 1 or 2.

The solubility of the compatibilizing monomer in water at 20°C is typically less than 0.03 g/mL, preferably 0.02 g/mL or less, more preferably from 0 g/mL to 0.01 g/mL. The use of the monomer having hydrophobic nature as a whole though having a hydrogen bonding proton-containing group such as a hydroxyl group can contribute to an improvement in compatibility between the siloxane monomer and the hydrophilic monomer and/or the hydrophilic polymer.

In one embodiment, the compatibilizing monomer has, in addition to the polymerizable group and the hydrogen bonding proton-containing group, a hydrophobic group containing two or more carbon atoms, preferably four or more carbon atoms. In such embodiment, it is preferred that the compatibilizing monomer have the polymerizable group, an intermediate portion containing the hydrogen bonding proton-containing group, and a hydrophobic terminal portion containing two or more carbon atoms. More specifically, it is preferred that: the polymerizable group be arranged at one terminal portion of a molecule of the compatibilizing monomer; the hydrophobic group be arranged at the other terminal portion; and a group having relatively high hydrophilicity containing the hydrogen bonding proton-containing group be arranged therebetween. The compatibilizing monomer having a hydrogen bonding proton-containing group at a position relatively close to a polymerizable group such as a (meth)acryloyl group, and having a terminal hydrophobic group at a position relatively distant therefrom can contribute to an improvement in compatibility between the siloxane monomer and the hydrophilic monomer and/or the hydrophilic polymer.

The compatibilizing monomer in the above-mentioned embodiment may be represented by the following formula (B):

$$P^3\text{-}A\text{-}B \qquad (B)$$

(where:

$P^3$ represents a (meth)acryloyl group;
A represents a divalent atomic group containing the hydrogen bonding proton-containing group or forming the hydrogen bonding proton-containing group together with $P^3$; and
B represents a hydrocarbon group having 2 to 20 carbon atoms,
provided that the total number of carbon atoms contained in A and B is 4 or more).

In the formula (B), the divalent atomic group set forth in A may be represented by, for example, the following formula (i):

$$*\text{-}X\text{-}R^{a1}\text{-}(L^{a1})_{r1}\text{-}[(R^{a2})_{r2}\text{-}(L^{a2})_{r3}]_{r4}\text{-} \qquad (i)$$

where:

"*" represents a bonding site with $P^3$;
X represents O or $NR^{a3}$;
$R^{a1}$ and $R^{a2}$ each independently represent an alkylene group that has 1 to 20 carbon atoms and may have a hydroxyl group;
$R^{a3}$ represents hydrogen or an alkyl group having 1 to 4 carbon atoms;
$L^{a1}$ and $L^{a2}$ each independently represent an ether bond, an ester bond, a carbonyl group, an amide bond, a urethane bond, or a urea bond;
r1 to r3 each independently represent 0 or 1; and
r4 represents an integer of from 0 to 10,
provided that:

when $R^{a2}$ is free of any hydroxyl group, none of r3 and r4 represents 0; and
the atomic group represented by (i) has at least one hydrogen bonding proton-containing group.

$R^{a1}$ and $R^{a2}$ each independently represent preferably an alkylene group that has 1 to 6 carbon atoms and may have a hydroxyl group, more preferably an alkylene group that has 1 to 4 carbon atoms and may have a hydroxyl group. Specifically, it is preferred that at least one of $R^{a1}$ or $R^{a2}$ have a hydroxyl group, and it is more preferred that $R^{a1}$ have

a hydroxyl group. Examples of such embodiment include an embodiment in which $R^{a1}$ has a hydroxyl group and $R^{a2}$ is absent (e.g., an embodiment in which r1=0 or 1, r2=0, and r3=0) and an embodiment in which $R^{a1}$ and $R^{a2}$ both have a hydroxyl group (e.g., an embodiment in which r1=1, r2=1, and r3=0 or 1).

If present, $L^{a1}$ and $L^{a2}$ may preferably each independently represent an ether bond or an ester bond. When both of $R^{a1}$ and $R^{a2}$ are free of any hydroxyl group, at least one of $L^{a1}$ or $L^{a2}$ preferably represents an amide bond, a urethane bond, or a urea bond.

The hydrocarbon group set forth in B described above may be linear, may be branched, or may contain a cyclic structure, and may contain a heteroatom at any appropriate position. The heteroatom is not limited as long as the effects of the present invention are obtained, and examples thereof include halogens such as fluorine. B may represent a hydrocarbon group (e.g., an alkyl group) having preferably 4 to 20 carbon atoms, more preferably 5 to 12 carbon atoms, and being unsubstituted or substituted with fluorine.

Specific examples of the compatibilizing monomer in the above-mentioned embodiment are shown in the following formula (I), (V), or (VI).

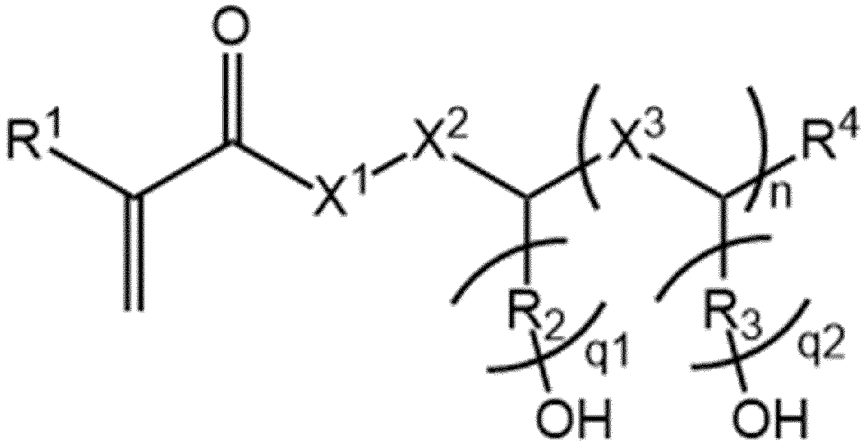

(I)

(where:

$R^1$ represents a hydrogen atom or a methyl group;
$R^2$ and $R^3$ each independently represent an alkylene group having 1 to 6 carbon atoms;
$R^4$ represents a hydrocarbon group having 2 to 20 carbon atoms, or a structure represented by $-(R^{5a})_s-O-R^{5b}$, $-(R^{5a})_s-O(C=O)-R^{5b}$, or $-(R^{5a})_s-(C=O)O-R^{5b}$ (where $R^{5a}$ represents an alkylene group having 1 to 4 carbon atoms, $R^{5b}$ represents a hydrocarbon group having 2 to 20 carbon atoms, and "s" represents 0 or 1);
$X^1$ represents O or $NR^6$ (where $R^6$ represents hydrogen or an alkyl group having 1 to 4 carbon atoms);
$X^2$ represents a single bond or an alkylene group having 1 to 3 carbon atoms;
$X^3$ represents a single bond, an alkylene group having 1 to 6 carbon atoms, or a structure represented by $-(R^{7a})_t-O-(R^{7b})_u-$, $-(R^{7a})_t-O(C=O)-(R^{7b})_u-$, $-(R^{7a})_t-(C=O)O-(R^{7b})_u-$, $-(R^{7a})_t-(C=O)-(R^{7b})_u-$, or any one of the following formulae (II) to (IV):

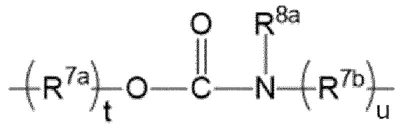

(II)

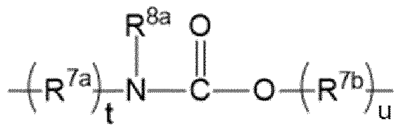

(III)

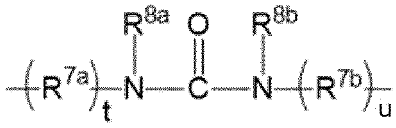

(IV)

(where $R^{7a}$ represents an alkylene group having 1 to 4 carbon atoms, $R^{7b}$ represents an alkylene group having 1 to 20 carbon atoms, $R^{8a}$ and $R^{8b}$ each independently represent a hydrogen atom or an alkyl group having 1 to 4 carbon atoms, and "t" and "u" each independently represent 0 or 1);

"n" represents an integer of from 0 to 10; and
q1 and q2 each independently represent 0 or 1,
provided that:

the total number of carbon atoms contained in a residue excluding the polymerizable group ($CH_2$=$CR^1$-CO-) is 3 or more; and
the hydrocarbon groups or alkyl groups set forth in $R^4$, $R^{5b}$, $R^6$, $R^{8a}$, and $R^{8b}$ may each independently have a heteroatom.)

With regard to the formula (I), the hydrocarbon groups set forth in $R^4$ and $R^{5b}$ are each an aliphatic hydrocarbon group (e.g., an alkyl group) having preferably 2 to 12 carbon atoms, more preferably 3 to 10 carbon atoms, still more preferably 4 to 10 carbon atoms. Each of those hydrocarbon groups may be linear, may be branched, or may contain a cyclic structure. It is conceived that, by virtue of those hydrocarbon groups functioning as terminal hydrophobic groups, the compatibilizing monomer can exhibit affinity for the siloxane monomer.

Specific examples of the hydrocarbon group set forth in $R^4$ or $R^{5b}$ include: linear alkyl groups, such as an ethyl group, a n-propyl group, a n-butyl group, a n-pentyl group, a n-hexyl group, a n-heptyl group, a n-octyl group, a n-nonyl group, and a n-decyl group; branched alkyl groups, such as an isopropyl group, a methylpropyl group, a t-butyl group, a dimethylpropyl group, an ethylpropyl group, a diethylpropyl group, a methylbutyl group, a dimethylbutyl group, a trimethylbutyl group, an ethylbutyl group, a propylbutyl group, a methylpentyl group, a dimethylpentyl group, an ethylpentyl group, a propylpentyl group, a butylpentyl group, a methylhexyl group, a dimethylhexyl group, a trimethylhexyl group, an ethylhexyl group, a propylhexyl group, a butylhexyl group, a methylheptyl group, a dimethylheptyl group, an ethylheptyl group, a propylheptyl group, a methyloctyl group, a dimethyloctyl group, an ethyloctyl group, and a methylnonyl group; cycloalkyl groups, such as a cyclopropyl group, a cyclobutyl group, a cyclopentyl group, a cyclohexyl group, a cycloheptyl group, a cyclooctyl group, and a cyclononyl group; cycloalkyl ring-containing alkyl groups, such as a cyclooctylethyl group, a cycloheptylmethyl group, a cycloheptylethyl group, a cyclohexylmethyl group, a cyclohexylethyl group, a cyclohexylpropyl group, a cyclohexylbutyl group, a cyclopentylethyl group, a cyclopentylpropyl group, a cyclopentylbutyl group, a cyclopentylpentyl group, a cyclobutylpropyl group, a cyclobutylbutyl group, a cyclobutylpentyl group, a cyclopropylbutyl group, a cyclopropylpentyl group, and a cyclopropylhexyl group; and bridged alicyclic hydrocarbon groups, such as a norbornyl group, a tricyclodecanyl group, a tetracyclododecyl group, an adamantyl group, a methyladamantyl group, an ethyladamantyl group, and a butyladamantyl group.

The groups represented by $R^6$, $R^{8a}$, and $R^{8b}$ are each preferably hydrogen or an alkyl group having 1 or 2 carbon atoms.

The alkylene groups set forth in $X^3$, $R^2$, $R^3$, $R^{5a}$, and $R^{7a}$ are each preferably a methylene group, an ethylene group, a propylene group, or a butylene group, more preferably a methylene group or an ethylene group.

The alkylene group set forth in $R^{7b}$ is an alkylene group having preferably 1 to 8 carbon atoms, more preferably 1 to 4 carbon atoms.

The total number of carbon atoms contained in the groups represented by $X^2$ and $R^2$ is preferably 3 or less, more preferably from 0 to 2, still more preferably 1 or 2 (e.g., an embodiment in which $X^2$ represents a methylene group or an ethylene group, and $R^2$ is absent (i.e., an embodiment in which q1=0), or an embodiment in which $X^2$ and $R^2$ both represent a methylene group). It is conceived that, by virtue of a hydroxyl group being arranged near a (meth)acryloyl group, the compatibilizing monomer can exhibit affinity for the hydrophilic monomer and/or the hydrophilic polymer.

The total number of carbon atoms contained in the group represented by $X^3$ is preferably from 0 to 10, more preferably from 1 to 5, still more preferably from 1 to 3.

The heteroatom that the hydrocarbon groups or alkyl groups set forth in $R^4$, $R^{5b}$, $R^6$, $R^{8a}$, and $R^{8b}$ may each have is not limited as long as the effects of the present invention are obtained, and examples thereof include halogens such as fluorine. In one embodiment, the hydrocarbon group or alkyl group set forth in $R^4$, $R^{5b}$, $R^6$, $R^{8a}$, or $R^{8b}$ may be a fluoroalkyl group or a perfluoroalkyl group.

"n" represents preferably from 0 to 5, more preferably 0, 1, or 2.

In one embodiment, in the formula (I), $R^1$ represents a hydrogen atom or a methyl group, $X^1$ represents O, $X^2$ represents a methylene group or an ethylene group, preferably a methylene group, "n" represents 0, $R^4$ represents -$(R^{5a})_s$-O-$R^{5b}$ (where $R^{5a}$ represents a methylene group, "s" represents 1, and $R^{5b}$ represents a hydrocarbon group that has 2 to 20 carbon atoms and may be substituted with fluorine), and q1 represents 0 or 1, preferably 0.

In one embodiment, in the formula (I), $R^1$ represents a hydrogen atom or a methyl group, $X^1$ represents O, $X^2$ represents a methylene group or an ethylene group, preferably a methylene group, "n" represents 0, $R^4$ represents -$(R^{5a})_s$-O(C=O)-$R^{5b}$ (where $R^{5a}$ represents a methylene group, "s" represents 1, and $R^{5b}$ represents a hydrocarbon group that has 2 to 20 carbon atoms and may be substituted with fluorine), and q1 represents 0 or 1, preferably 0.

In one embodiment, in the formula (I), $R^1$ represents a hydrogen atom or a methyl group, $X^1$ represents O, $X^2$ represents a methylene group or an ethylene group, preferably a methylene group, "n" represents 0, $R^4$ represents a

hydrocarbon group that has 2 to 20 carbon atoms and may be substituted with fluorine, and q1 represents 0 or 1, preferably 0.

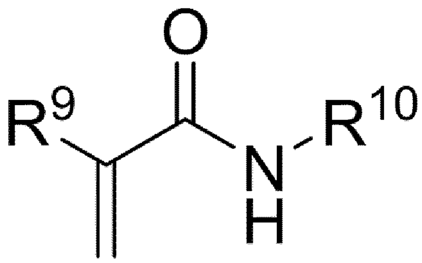

(V)

(where:

$R^9$ represents a hydrogen atom or a methyl group; and
$R^{10}$ represents a hydrocarbon group having 4 to 20 carbon atoms, or a structure represented by $-O-R^{10b}$, $-R^{10a}-O-R^{10b}$, $-R^{10a}-O(C=O)-R^{10b}$, $-R^{10a}-(C=O)O-R^{10b}$, or $-R^{10a}-(C=O)-R^{10b}$ (where $R^{10a}$ represents an alkylene group having 1 to 4 carbon atoms, and $R^{10b}$ represents a hydrocarbon group having 2 to 20 carbon atoms),
provided that:

the total number of carbon atoms contained in the group represented by $R^{10}$ is 4 or more; and
the hydrocarbon group set forth in $R^{10}$ or $R^{10b}$ may have a heteroatom.)

With regard to the formula (V), each hydrocarbon group set forth in $R^{10}$ or $R^{10b}$ is an aliphatic hydrocarbon group (e.g., an alkyl group) having preferably 4 to 12 carbon atoms, more preferably 4 to 10 carbon atoms. Each of those hydrocarbon groups may be linear, may be branched, or may contain a cyclic structure. It is conceived that, by virtue of those hydrocarbon groups functioning as terminal hydrophobic groups, the compatibilizing monomer can exhibit affinity for the siloxane monomer.

Specific examples of the hydrocarbon group set forth in $R^{10}$ or $R^{10b}$ may include the same ones (each having four or more carbon atoms) as the specific examples of the hydrocarbon group set forth in $R^4$ or $R^{5b}$.

The alkylene group set forth in $R^{10a}$ is preferably a methylene group, an ethylene group, a propylene group, or a butylene group, more preferably a methylene group or an ethylene group.

The heteroatom that the hydrocarbon group set forth in $R^{10}$ or $R^{10b}$ may have is not limited as long as the effects of the present invention are obtained, and examples thereof include halogens such as fluorine. In one embodiment, the hydrocarbon group set forth in $R^{10}$ or $R^{10b}$ may be a fluoroalkyl group or a perfluoroalkyl group.

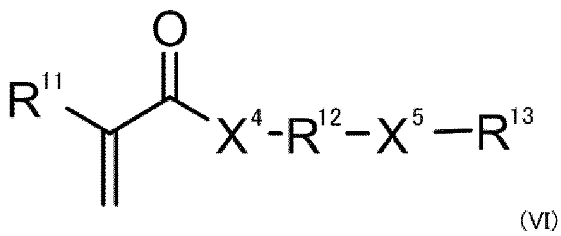

(VI)

(where:

$R^{11}$ represents a hydrogen atom or a methyl group;
$X^4$ represents O or $NR^{14}$ (where $R^{14}$ represents a hydrogen atom or an alkyl group having 1 to 4 carbon atoms);
$R^{12}$ represents an alkylene group having 2 to 14 carbon atoms;
$X^5$ represents a single bond, O, or a structure represented by any one of the following formulae (VII) to (IX):

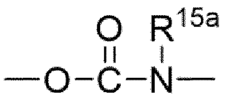 (VII), 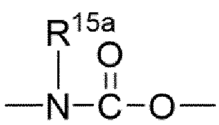 (VIII),

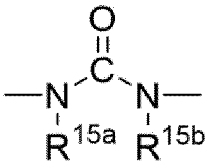

(IX)

(where $R^{15a}$ and $R^{15b}$ each independently represent a hydrogen atom or an alkyl group having 1 to 4 carbon atoms); and

$R^{13}$ represents a hydrocarbon group having 2 to 20 carbon atoms,

provided that:

when $X^4$ does not represent NH, $X^5$ represents a structure containing a urethane bond (-NHCOO-) or a urea bond (-NHCONH-); and

$R^{12}$, $R^{13}$, $R^{14}$, $R^{15a}$, and $R^{15b}$ may each independently have a heteroatom.)

With regard to the formula (VI), the alkylene group set forth in $R^{12}$ may be linear, may be branched, or may contain a cyclic structure. $R^{12}$ represents preferably an alkylene group having 2 to 6 carbon atoms, more preferably an ethylene group, a propylene group, or a butylene group.

The hydrocarbon group set forth in $R^{13}$ is an aliphatic hydrocarbon group (e.g., an alkyl group) having preferably 2 to 12 carbon atoms, more preferably 2 to 10 carbon atoms, still more preferably 4 to 10 carbon atoms. The hydrocarbon group may be linear, may be branched, or may contain a cyclic structure. It is conceived that, by virtue of the hydrocarbon group functioning as a terminal hydrophobic group, the compatibilizing monomer can exhibit affinity for the siloxane monomer.

Specific examples of the hydrocarbon group set forth in $R^{13}$ may include the same ones as the specific examples of the hydrocarbon group set forth in $R^4$ or $R^{5b}$.

Specific examples of the alkyl group set forth in each of $R^{14}$, $R^{15a}$, and $R^{15b}$ include a methyl group and an ethyl group.

The heteroatom that $R^{12}$, $R^{13}$, $R^{14}$, $R^{15a}$, and $R^{15b}$ may each have is not limited as long as the effects of the present invention are obtained, and examples thereof include halogens such as fluorine. In one embodiment, $R^{12}$, $R^{13}$, $R^{14}$, $R^{15a}$, or $R^{15b}$ may represent a fluoroalkyl group or a perfluoroalkyl group.

In another embodiment, the compatibilizing monomer has a (meth)acryloyl group and an alicycle containing four or more carbon atoms with at least one hydrogen atom being substituted with a hydrogen bonding proton-containing group. The alicycle has, for example, preferably 5 to 20 carbon atoms, more preferably 6 to 15 carbon atoms, still more preferably 8 to 12 carbon atoms, and may have a bridged structure. Preferred specific examples of the compatibilizing monomer in such embodiment include (meth)acrylates each having a bridged alicyclic group (e.g., an adamantyl group, a norbornyl group, a tricyclodecanyl group, or a tetracyclododecyl group) substituted with one or more hydroxyl groups, more specifically hydroxy(meth)acryloyloxyadamantane and dihydroxy(meth)acryloyloxyadamantane.

The blending ratio of the compatibilizing monomer (when two or more kinds of compatibilizing monomers are used, their total blending ratio) may be set to, for example, from 1 wt% to 40 wt%, preferably from 5 wt% to 35 wt%, more preferably from 10 wt% to 30 wt% with respect to the total blending amount of all monomer components and, if present, the hydrophilic polymer in the polymerizable composition. When the blending ratio of the compatibilizing monomer falls within the ranges, there can be obtained a polymer material having excellent transparency and an excellent antifouling property while maintaining high oxygen permeability.

A-1-3-3. Functional Monomer

The functional monomer is added as required for the purpose of imparting a predetermined function to the polymer material. Examples of the functional monomer include a polymerizable dye, a polymerizable ultraviolet absorber, and a polymerizable ultraviolet absorbing dye.

Specific examples of the polymerizable dye include an azo-based polymerizable dye, an anthraquinone-based polymerizable dye, a nitro-based polymerizable dye, and a phthalocyanine-based polymerizable dye. Those dyes may be used alone or as a mixture thereof.

Specific examples of the polymerizable ultraviolet absorber include a benzophenone-based polymerizable ultraviolet absorber, a benzotriazole-based polymerizable ultraviolet absorber, a salicylic acid derivative-based polymerizable ultraviolet absorber, and 2-cyano-3-phenyl-3-(3'-(meth)acryloyloxyphenyl)propenoic acid methyl ester. Those polymerizable ultraviolet absorbers may be used alone or as a mixture thereof.

Specific examples of the polymerizable ultraviolet absorbing dye include a benzophenone-based polymerizable

ultraviolet absorbing dye and a benzoic acid-based polymerizable ultraviolet absorbing dye. Those dyes may be used alone or as a mixture thereof.

The blending ratio of the functional monomer is, for example, from 0.001 wt% to 5 wt%, preferably from 0.05 wt% to 3 wt% with respect to the total blending amount of all monomer components and, if present, the hydrophilic polymer in the polymerizable composition.

A-1-3-4. Other Copolymerizable Monomer

Any appropriate monomer may be used as other copolymerizable monomer depending on purposes. An example thereof is an alkyl (meth)acrylate having an alkyl group having 2 to 5 carbon atoms. The blending ratio of the other copolymerizable monomer is, for example, from 0.001 wt% to 5 wt%, preferably from 0.05 wt% to 3 wt% with respect to the total blending amount of all monomer components and, if present, the hydrophilic polymer in the polymerizable composition.

A-2. Hydrophilic Polymer

The hydrophilic polymer is typically a non-polymerizable component free of any polymerizable group. When the monomer components are polymerized in the presence of the hydrophilic polymer, there can be obtained a polymer material in which a polymer containing structural units derived from the monomer components and the hydrophilic polymer are highly complexed with each other, and whose surface hydrophilicity is increased.

Any appropriate polymer that can impart surface hydrophilicity to the polymer material may be used as the hydrophilic polymer. For example, a polymer, such as polyvinylamide (e.g., polyvinyllactam), polyamide, polylactone, polyimide, or polylactam, may be used as a hydrophilic polymer. Of those, a polymer containing, in a main chain or side chain thereof, a cyclic structure, such as a cyclic amide structure or a cyclic imide structure, may be preferably used. The hydrophilic polymer may be a random copolymer, alternate copolymer, block copolymer, or graft copolymer formed of two or more kinds of monomers. In addition, the hydrophilic polymers may be used alone or in combination thereof.

Specific examples of the hydrophilic polymer include poly-N-vinylpyrrolidone, poly-N-vinyl-2-piperidone, poly-N-vinyl-2-caprolactam, poly-N-vinyl-3-methyl-2-caprolactam, poly-N-vinyl-3-methyl-2-piperidone, poly-N-vinyl-4-methyl-2-piperidone, poly-N-vinyl-4-methyl-2-caprolactam, poly-N-vinyl-3-ethyl-2-pyrrolidone, poly-N-vinyl-4,5-dimethyl-2-pyrrolidone, polyvinylimidazole, poly-N,N-dimethylacrylamide, polyvinyl alcohol, poly(meth)acrylic acid, poly(2-hydroxyethyl) (meth)acrylate, polyalkylene glycols such as polyethylene glycol, poly-2-ethyloxazoline, heparin polysaccharide, polysaccharide, and copolymers thereof. Of those, for example, poly-N-vinylpyrrolidone, polyalkylene glycols, polysaccharide, poly(meth)acrylic acid, polyvinyl alcohol, and poly(2-hydroxyethyl) (meth)acrylate may be preferably used.

The weight average molecular weight of the hydrophilic polymer may be, for example 100,000 or more, preferably from 150,000 to 2,000,000, more preferably from 300,000 to 1,800,000, still more preferably from 500,000 to 1,500,000.

The K-value of the hydrophilic polymer may be, for example, from 30 to 150, preferably from 60 to 120, more preferably from 90 to 120. Herein, the K-value may be determined by measuring a viscosity by Method I under Viscosity Determination <2.53> in the Japanese Pharmacopoeia, Sixteenth Edition, followed by calculation with Fikentscher's equation in accordance with a method described in the "K-value" section in the Pharmacopoeia.

The blending ratio of the hydrophilic polymer in the polymerizable composition may be set to typically from 1 wt% to 30 wt%, preferably from 3 wt% to 25 wt%, more preferably from 4 wt% to 20 wt% with respect to the total blending amount of all monomer components and the hydrophilic polymer in the polymerizable composition. When the blending amount of the hydrophilic polymer falls within the ranges, a polymer material having a high water content and being excellent in surface hydrophilicity can be obtained.

A-3. Additive

Any appropriate additive may be selected as the additive depending on purposes. Examples of the additive include a polymerization initiator and an organic solvent.

The polymerization initiator is appropriately selected depending on a polymerization method. As a thermal polymerization initiator to be used for polymerization through heating, there are given, for example, 2,2'-azobisisobutyronitrile, 2,2'-azobis(2,4-dimethylvaleronitrile), benzoyl peroxide, t-butyl hydroperoxide, cumene hydroperoxide, lauroyl peroxide, t-butyl peroxyhexanoate, and 3,5,5-trimethylhexanoyl peroxide. Those thermal polymerization initiators may be used alone or as a mixture thereof.

The blending ratio of the thermal polymerization initiator in the polymerizable composition is preferably from 0.001 wt% to 3 wt%, more preferably from 0.01 wt% to 2 wt% with respect to all components in the polymerizable composition (excluding the organic solvent).

As a photopolymerization initiator to be used for polymerization through photoirradiation, there are given, for

example: phosphine oxide-based photopolymerization initiators, such as 2,4,6-trimethylbenzoyl-diphenylphosphine oxide (TPO) and bis(2,4,6-trimethylbenzoyl)-phenylphosphine oxide; benzoinbased photopolymerization initiators, such as methyl o-benzoylbenzoate, methyl benzoylformate, benzoin methyl ether, benzoin ethyl ether, benzoin isopropyl ether, benzoin isobutyl ether, and benzoin-n-butyl ether; phenone-based photopolymerization initiators, such as 2-hydroxy-2-methyl-1-phenylpropan-1-one (HMPPO), p-isopropyl-$\alpha$-hydroxyisobutylphenone, p-t-butyltrichloroacetophenone, 2,2-dimethoxy-2-phenylacetophenone, $\alpha$,$\alpha$-dichloro-4-phenoxyacetophenone, and N,N-tetraethyl-4,4-diaminobenzophenone; 1-hydroxycyclohexyl phenyl ketone; 1-phenyl-1,2-propanedione-2-(o-ethoxycarbonyl)oxime; thioxanthone-based photopolymerization initiators, such as 2-chlorothioxanthone and 2-methylthioxanthone; dibenzosuberone; 2-ethylanthraquinone; benzophenone acrylate; benzophenone; and benzil. Those photopolymerization initiators may be used alone or as a mixture thereof. In addition, a photosensitizer may be used together with the photopolymerization initiator.

The blending ratio of each of the photopolymerization initiator and the photosensitizer in the polymerizable composition is preferably from 0.001 wt% to 2 wt%, more preferably from 0.01 wt% to 1 wt% with respect to all components in the polymerizable composition (excluding the organic solvent).

The organic solvent may be a water-soluble organic solvent having high polarity, or may be a water-insoluble organic solvent having low polarity. As the water-soluble organic solvent, for example, an alcohol having 1 to 4 carbon atoms, acetone, methyl ethyl ketone, dimethylformamide, dimethyl sulfoxide, acetonitrile, N-methyl-2-pyrrolidone, dimethoxyethane, tetrahydrofuran, or 1,4-dioxane may be used. When the water-soluble organic solvent is used, compatibility between the monomer components or between the hydrophilic polymer and the monomer components can be improved. In addition, the water-soluble organic solvent can be easily removed from the polymer material through immersion in water.

As the water-insoluble organic solvent, for example, hexane, cyclohexane, heptane, octane, dimethyl ether, diethyl ether, benzene, toluene, xylene, ethyl acetate, propyl acetate, butyl acetate, dichloromethane, chloroform, carbon tetrachloride, or an alcohol having 6 or more carbon atoms may be used. When the water-insoluble organic solvent is used, compatibility between the monomer components or between the hydrophilic polymer and the monomer components can be improved. In addition, when the water-insoluble organic solvent is added to the polymerizable composition, the kinematic viscosity of the polymerizable composition is reduced to a higher extent than in the case of using the water-soluble organic solvent, and hence the handling of the polymerizable composition can be facilitated.

The blending amount of the organic solvent in the polymerizable composition may be, for example, 50 wt% or less, preferably 40 wt% or less, more preferably 30 wt% or less with respect to all components in the polymerizable composition (including the organic solvent).

An additive that has hitherto been used in an ocular lens application may be used as an additive other than those described above. Examples thereof include a cooling agent, a viscosifying agent, a surfactant, and a non-polymerizable dye, ultraviolet absorber, or ultraviolet absorbing dye.

The blending ratio of the other additive in the polymerizable composition may be set to, for example, from 0.001 wt% to 5 wt%, preferably from 0.005 wt% to 3 wt% with respect to all components in the polymerizable composition (excluding the organic solvent).

B. Polymerization Method

The above-mentioned polymer material may be obtained by, for example, subjecting the polymerizable composition containing the above-mentioned components to heating and/or light (ultraviolet light and/or visible light) irradiation, to polymerize the monomer components in the polymerizable composition. In addition, the polymer material may also be obtained by polymerization through electron beam irradiation in place of the light irradiation.

As a polymerization method, a bulk polymerization method or a solution polymerization method may be used. In the bulk polymerization method, part of the monomer components remain unpolymerized in some cases. In the solution polymerization method, a solvent that is not involved in the reaction may remain in the resultant polymer. In the production of a medical device such as a contact lens, in order to reduce the amounts of those residual substances to the extent possible, the following treatment may be performed: the residual substances are eluted to be removed from the resultant polymer material by immersing the polymer material in water or an organic solvent, or a mixed solution thereof, preferably repeating the immersion.

When the polymer material is, for example, intended for use in a contact lens, the polymer material may be molded into a desired shape (e.g., a hemispherical shape) by subjecting the polymerizable composition to a reaction by a molding method. When the polymerizable composition is to be polymerized through heating by the molding method, a mold corresponding to the shape of a desired ocular lens material is filled with the polymerizable composition, and the mold is slowly heated.

A heating temperature and a heating time in the heating of the polymerizable composition in the mold are appropriately set depending on, for example, the composition of the polymerizable composition. The heating temperature

is preferably 50°C or more and 150°C or less, more preferably 60°C or more and 140°C or less. The heating time in the heating of the polymerizable composition in the mold is preferably 10 minutes or more and 120 minutes or less, more preferably 20 minutes or more and 60 minutes or less.

In the molding method, when the polymerizable composition is to be polymerized through light irradiation, a mold corresponding to the shape of a desired ocular lens is filled with the polymerizable composition, and then the mold is irradiated with light. A material for the mold to be used for the polymerization through light irradiation is not particularly limited as long as the material can transmit light required for the polymerization.

The wavelength of the light with which the polymerizable composition in the mold is irradiated is appropriately set depending on, for example, the kind of the photopolymerization initiator to be used. A light irradiance and an irradiation time are appropriately set depending on, for example, the composition of the polymerizable composition. The light irradiance is preferably from 0.1 $mW/cm^2$ to 100 $mW/cm^2$. The irradiation time is preferably 1 minute or more. Light may be applied stepwise at different irradiances.

Through the polymerization by the molding method, a polymer material having a desired shape is obtained. The polymer material as the molded body thus obtained may be subjected to mechanical processing, such as lathe cutting processing or polishing processing, as required. Lathe cutting may be performed over the entirety of one or both surfaces of the polymer material, or may be performed on part of one surface or both surfaces of the polymer material.

For the purpose of surface modification, the above-mentioned polymer material may be subjected to surface modification treatment, such as low-temperature plasma treatment, atmospheric-pressure plasma, or corona discharge.

C. Characteristics of Polymer Material

The Young's modulus of the polymer material in one embodiment of the present invention is preferably from 0.3 MPa to 2.3 MPa, more preferably from 0.3 MPa to 1.2 MPa. When the polymer material having such Young's modulus is used, there can be obtained an ocular lens excellent in wearing comfort and handleability when processed into a contact lens.

The stress relaxation rate of the polymer material in one embodiment of the present invention is preferably from 10% to 40%, more preferably from 10% to 30%. When the polymer material having such stress relaxation rate is used, there can be obtained an ocular lens excellent in wearing comfort and handleability when processed into a contact lens.

The oxygen permeability coefficient (Dk value) of the polymer material according to one embodiment of the present invention is preferably 20 Barrer or more, more preferably 30 Barrer or more, still more preferably from 50 Barrer to 150 Barrer.

The water content of the polymer material according to one embodiment of the present invention is preferably 11 wt% or more, more preferably 30 wt% or more, still more preferably from 30 wt% to 70 wt%. When the water content of the polymer material is set to 11 wt% or more, the polymer material to be obtained can be made into a hydrogel. Accordingly, the polymer material can be improved in wearing comfort when processed into a contact lens, and its strength, oxygen permeability, and surface hydrophilicity can be set in a well-balanced manner.

Examples

Now, the present invention is specifically described by way of Examples. However, the present invention is by no means limited to these Examples. The terms "part(s)" and "%" in Examples and Comparative Examples are by weight unless otherwise stated.

[Components Used]

The meanings of abbreviations for components used in the following Examples and Comparative Examples are shown below.

<Siloxane Monomer>

· AA-PDMS: polymerizable compound having the following structure

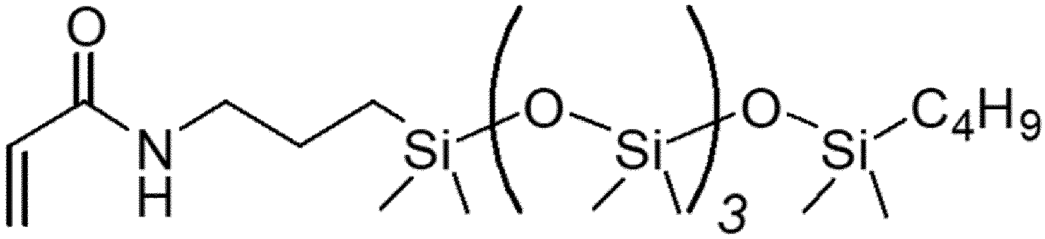

· MAUS: polymerizable compound having the following structure (where n=about 40)

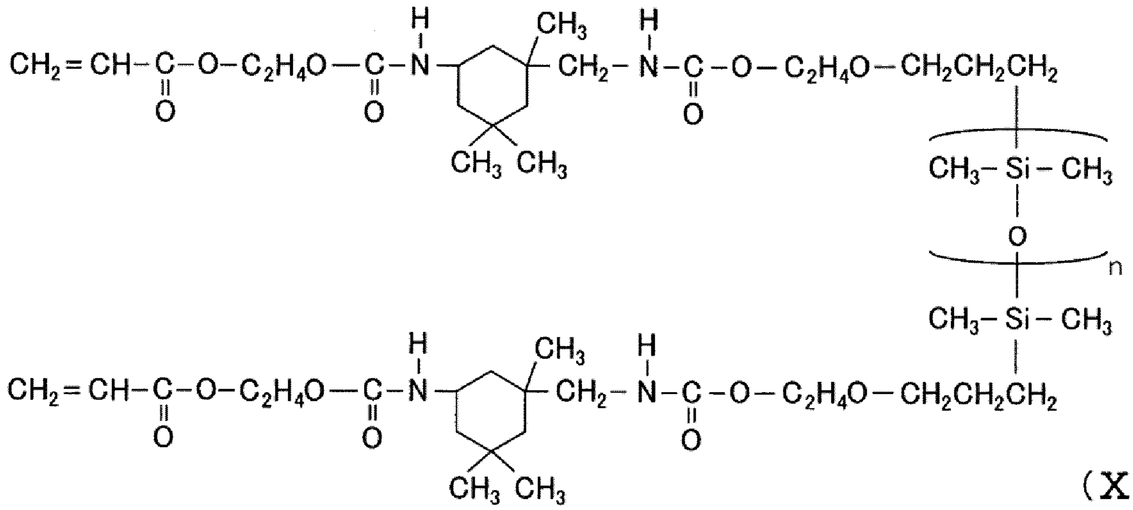

(X)

· SiGMA: (3-methacryloxy-2-hydroxypropyloxy)propylbis(trimethylsiloxy)methylsilane (the structure is shown below)

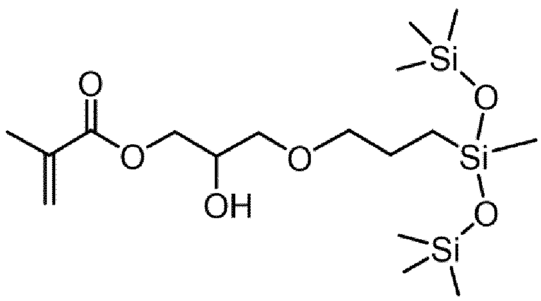

<Crosslinkable Monomer>

- EDMA: ethylene glycol dimethacrylate (HLB: 7.43)
- TEGMA: tetraethylene glycol methacrylate (HLB: 8.42)
- PEGDMA (n=6): hexaethylene glycol dimethacrylate (HLB: 9.08)
- PEGDMA (n=9): polyethylene glycol dimethacrylate (EO repetition number: 9, HLB: 10.07, manufactured by Shin-Nakamura Chemical Co., Ltd., "NK Ester 9G")
- PEGDMA (n=14): polyethylene glycol dimethacrylate (EO repetition number: 14, HLB: 11.72, manufactured by Shin-Nakamura Chemical Co., Ltd., "NK Ester 14G")
- PEGDMA (n=23): polyethylene glycol dimethacrylate (EO repetition number: 23, HLB: 14.69, manufactured by Shin-Nakamura Chemical Co., Ltd., "NK Ester 23G")
- 9PG (n=7): polypropylene glycol dimethacrylate (PO repetition number: 7, HLB: 6.05, manufactured by Shin-Nakamura Chemical Co., Ltd., "NK Ester 9PG")

· 25PDC: polyethylene glycol polypropylene glycol dimethacrylate (EO repetition number: 8, PO repetition number: 9, AO repeating structure: block type of EO-PO-EO, HLB: 8.39, manufactured by NOF Corporation, "25PDC-900B")
· 40PDC: polyethylene glycol polypropylene glycol dimethacrylate (EO repetition number: 15, PO repetition number: 18, AO repeating structure: block type of EO-PO-EO, HLB: 9.35, manufactured by NOF Corporation, "40PDC-1700B")
· AMA: allyl methacrylate

<Compatibilizing Monomer>

· EH(OH)MA: polymerizable compound having the following structure (solubility in water at 20°C: less than 0.01 g/mL)

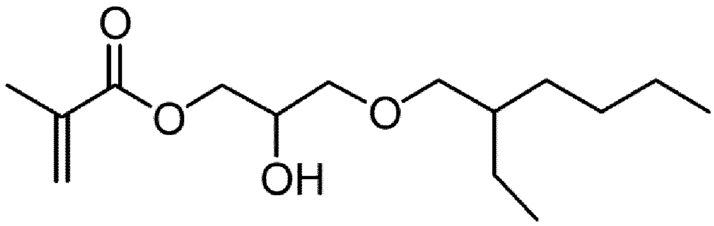

<Hydrophilic Monomer>

· DMAA: N,N-dimethylacrylamide
· HEMA: 2-hydroxyethyl methacrylate
· N-VP: N-vinyl-2-pyrrolidone
· 2-MTA: methoxyethyl acrylate

<Functional Monomer>

· HMEPBT: benzotriazole-based polymerizable ultraviolet absorber (2-(2'-hydroxy-5'-methacryloyloxyethylphenyl)-2H-benzotriazole)
· RB246: anthraquinone-based polymerizable dye

<Hydrophilic Polymer>

· PVP K-90: polyvinylpyrrolidone (Mw=1,000,000 to 1,500,000)

<Additive>

· TPO: initiator (2,4,6-trimethylbenzoyl-diphenylphosphine oxide)
· IPA: isopropyl alcohol

[Synthesis Example 1: Preparation of EH(OH)MA]

1) A brown recovery flask was loaded with ethylhexyl glycidyl ether, methacrylic acid, tetrabutylammonium bromide, and p-methoxyphenol, and the components were dissolved. The flask was fitted with a Dimroth condenser, followed

by stirring in an oil bath at 90°C overnight.
2) The reaction solution was brought back to room temperature and dissolved in hexane, and the resultant solution was transferred to a separating funnel.
3) The hexane layer was washed with a 1 M aqueous solution of sodium hydrogen carbonate.
4) The hexane layer was washed with distilled water.
5) The hexane layer was washed with saturated saline.
6) The hexane layer was collected, an appropriate amount of sodium sulfate was added for drying, and the whole was left to stand for a while.
7) Sodium sulfate was removed by filtration.
8) The hexane layer was concentrated under reduced pressure to obtain a slightly yellowish transparent liquid. $^1H$ NMR ($CDCl_3$, 400 MHz) and gas chromatographic measurement verified that the desired compound was obtained.

[Synthetic Example 2: Preparation of Hexaethylene Glycol Dimethacrylate]

1) A brown recovery flask was loaded with hexaethylene glycol and methacrylic acid, and the components were dissolved. A small amount of sulfuric acid was added, followed by stirring in an oil bath at 100°C for 4 hours.
2) The reaction solution was returned to room temperature and dissolved in a toluene-hexane mixed solvent, and the resultant solution was transferred to a separating funnel.
3) The organic layer was washed with an aqueous solution of sodium hydrogen carbonate.
4) The organic layer was washed with distilled water.
5) The organic layer was washed with brine.
6) The organic layer was collected, an appropriate amount of sodium sulfate was added for drying, and the whole was left to stand for a while.
7) Sodium sulfate was removed by filtration.
8) The organic layer was concentrated under reduced pressure to give a colorless transparent liquid. $^1H$ NMR ($CDCl_3$, 400 MHz) and gas chromatographic measurement verified that the desired compound was obtained.

[Example 1-A]

30 Parts by weight of AA-PDMS serving as a siloxane monomer, 25.5 parts by weight of EH(OH)MA serving as a compatibilizing monomer, 26 parts by weight of DMAA and 5 parts by weight of HEMA serving as hydrophilic monomers, 3.6 parts by weight of PEGDMA (E=6) serving as a crosslinkable monomer, 1.8 parts by weight of HMEPBT serving as a polymerizable ultraviolet absorber, 0.01 part by weight of RB246 serving as a polymerizable dye, 7 parts by weight of PVP K-90 (manufactured by BASF) serving as a hydrophilic polymer, 0.4 part by weight of TPO serving as a polymerization initiator, and 20 parts by weight of IPA serving as a solvent were mixed to prepare a polymerizable composition. The resultant polymerizable composition was poured into a mold having a contact lens shape (made of polypropylene, and corresponding to a contact lens having a diameter of 14.2 mm and a thickness of 0.08 mm) . Then, photopolymerization was performed by irradiating the mold with LED light at room temperature. After the polymerization, a polymer material having a contact lens shape was removed from the mold. Thus, a silicone hydrogel contact lens was obtained.

[Examples 1-B to 4-A and Comparative Examples 1-A to 3-B]

Silicone hydrogel contact lenses were obtained in the same manner as in Example 1-A except that the polymerizable compositions were prepared by mixing respective components so as to achieve compositions shown in Table 1 to Table 4.

Table 1

| Blended components of polymerizable composition | Comparative Example | | Example | | | | | | |
|---|---|---|---|---|---|---|---|---|---|
| | 1-A | 1-B | 1-A | 1-B | 1-C | 1-D | 1-E | 1-F | 1-G |
| AA-PDMS | 30 | 30 | 30 | 30 | 30 | 30 | 30 | 30 | 30 |
| EH(OH)MA | 25.5 | 25.5 | 25.5 | 25.5 | 25.5 | 25.5 | 25.5 | 25.5 | 25.5 |

(continued)

| Blended components of polymerizable composition | Comparative Example | | Example | | | | | | |
|---|---|---|---|---|---|---|---|---|---|
| | 1-A | 1-B | 1-A | 1-B | 1-C | 1-D | 1-E | 1-F | 1-G |
| DMAA | 26 | 26 | 26 | 26 | 26 | 26 | 26 | 26 | 26 |
| HEMA | 5 | 5 | 5 | 5 | 5 | 5 | 5 | 5 | 5 |
| PVP K-90 | 7 | 7 | 7 | 7 | 7 | 7 | 7 | 7 | 7 |
| EDMA | 1.7 | | - | - | - | - | - | - | - |
| TEGMA | - | 2.8 | - | - | - | - | - | - | - |
| PEGDMA (n=6) | - | - | 3.6 | - | - | - | - | - | - |
| PEGDMA (n=9) | - | - | - | 4.7 | - | - | - | - | - |
| PEGDMA (n=14) | - | - | - | - | 6.5 | - | - | - | - |
| PEGDMA (n=23) | - | - | - | - | - | 10.4 | - | - | - |
| 25PDC | - | - | - | - | - | - | 9.3 | - | - |
| 40PDC | - | - | - | - | - | - | - | 18.5 | - |
| 9PG | - | - | - | - | - | - | - | - | 4.7 |
| TPO | 0.4 | | | | | | | | |
| HMEPBT | 1.8 | | | | | | | | |
| RB246 | 0.01 | | | | | | | | |
| IPA | 20 | | | | | | | | |
| (part(s) by weight) | | | | | | | | | |

Table 2

| Blended components of polymerizable composition | Comparative Example | | Example | | | | | | |
|---|---|---|---|---|---|---|---|---|---|
| | 2-A | 2-B | 2-A | 2-B | 2-C | 2-D | 2-E | 2-F | 2-G |
| AA-PDMS | 30 | 30 | 30 | 30 | 30 | 30 | 30 | 30 | 30 |
| SiGMA | 25.5 | 25.5 | 25.5 | 25.5 | 25.5 | 25.5 | 25.5 | 25.5 | 25.5 |
| DMAA | 26 | 26 | 26 | 26 | 26 | 26 | 26 | 26 | 26 |
| HEMA | 5 | 5 | 5 | 5 | 5 | 5 | 5 | 5 | 5 |
| PVP K-90 | 7 | 7 | 7 | 7 | 7 | 7 | 7 | 7 | 7 |
| EDMA | 1.7 | | - | - | - | - | - | - | - |
| TEGMA | - | 2.8 | - | - | - | - | - | - | - |
| PEGDMA (n=6) | - | - | 3.6 | - | - | - | - | - | - |
| PEGDMA (n=9) | - | - | - | 4.7 | - | - | - | - | - |
| PEGDMA (n=14) | - | - | - | - | 6.5 | - | - | - | - |
| PEGDMA (n=23) | - | - | - | - | - | 10.4 | - | - | - |
| 25PDC | - | - | - | - | - | - | 9.3 | - | - |
| 40PDC | - | - | - | - | - | - | - | 18.5 | - |
| 9PG | - | - | - | - | - | - | - | - | 4.7 |

(continued)

| Blended components of polymerizable composition | Comparative Example | | Example | | | | | | |
|---|---|---|---|---|---|---|---|---|---|
| | 2-A | 2-B | 2-A | 2-B | 2-C | 2-D | 2-E | 2-F | 2-G |
| TPO | 0.4 | | | | | | | | |
| HMEPBT | 1.8 | | | | | | | | |
| RB246 | 0.01 | | | | | | | | |
| IPA | 20 | | | | | | | | |
| (part(s) by weight) | | | | | | | | | |

Table 3

| Blended components of polymerizable composition | Comparative Example | | Example | | | | |
|---|---|---|---|---|---|---|---|
| | 3-A | 3-B | 3-A | 3-B | 3-C | 3-D | 3-E |
| MAUS | 5 | 5 | 5 | 5 | 5 | 5 | 5 |
| AA-PDMS | 31 | 31 | 31 | 31 | 31 | 31 | 31 |
| DMAA | 18.5 | 18.5 | 18.5 | 18.5 | 18.5 | 18.5 | 18.5 |
| N-VP | 18 | 18 | 18 | 18 | 18 | 18 | 18 |
| 2-MTA | 21 | 21 | 21 | 21 | 21 | 21 | 21 |
| EDMA | 1.7 | - | - | - | - | - | - |
| TEGMA | - | 2.8 | - | - | - | - | - |
| PEGDMA (n=6) | - | - | 3.6 | - | - | - | - |
| PEGDMA (n=9) | - | - | - | 4.7 | - | - | - |
| PEGDMA (n=14) | - | - | - | - | 6.5 | - | - |
| PEGDMA (n=23) | - | - | - | - | - | 10.4 | - |
| 25PDC | - | - | - | - | - | - | 9.3 |
| 40PDC | - | - | - | - | - | - | - |
| 9PG | - | - | - | - | - | - | - |
| AMA | 0.3 | | | | | | |
| TPO | 0.6 | | | | | | |
| HMEPBT | 1 | | | | | | |
| RB246 | 0.02 | | | | | | |
| IPA | 5 | | | | | | |
| (part(s) by weight) | | | | | | | |

Table 4

| Blended components of polymerizable composition | Example |
|---|---|
| | 4-A |
| AA-PDMS | 37 |
| EH(OH)MA | 21.2 |

(continued)

| Blended components of polymerizable composition | Example |
|---|---|
| | 4-A |
| DMAA | 28.5 |
| HEMA | 4 |
| PVP K-90 | 7 |
| EDMA | 1.3 |
| TEGMA | - |
| PEGDMA (n=6) | - |
| PEGDMA (n=9) | 1 |
| PEGDMA (n=14) | - |
| PEGDMA (n=23) | - |
| 25PDC | - |
| 40PDC | - |
| 9PG | - |
| TPO | 0.4 |
| RUVA-93 | 1.8 |
| IPA | 14 |
| (part (s) by weight) | |

The contact lenses obtained in Examples and Comparative Examples described above were each immersed in distilled water and swollen until equilibrium was reached. The water was replaced with a phosphate buffer at a pH of 7.5, and the contact lenses were each swollen until equilibrium was reached. After that, the buffer was replaced with a fresh equal amount of the phosphate buffer, and sterilization was performed in an autoclave at 121°C for 20 minutes, followed by characteristic evaluations described below. In the measurement of an oxygen permeability coefficient, a plate-type sample processed into a circular shape having a diameter of 14.0 mm was used, which had been subjected to polymerization, hydration treatment, and sterilization treatment in the same manner as above except that a mold made of PP for obtaining a plate-type sample having an average thickness of about 0.3 mm was used in place of the mold having a contact lens shape. The evaluation results are shown in FIG. 1.

<<Lipid Deposition Evaluation>>

1) An artificial lipid that was solid at ordinary temperature (product name: "PHARMASOL") was heated to 60°C to be melted, and was placed in wells at 1.7 mL/lens.
2) Water on the surface of a contact lens was wiped off, the contact lens was placed in each well, and then the whole was left to stand in a dryer at 60°C for 1 h.
3) The contact lens was removed from the well and rinsed in a contact lens cleaning solution (manufactured by Menicon Co., Ltd., product name: "Epica Cold") in a beaker, and then both surfaces thereof were each cleaned by 20 strokes per one surface of scrub with a contact lens cleaning solution (manufactured by Menicon Co., Ltd., product name: "Epica Cold") or hot water.
4) A contact lens cleaning solution (manufactured by Menicon Co., Ltd., product name: "Epica Cold") and the contact lens were placed in each well of a multiwell plate, and the whole was left to stand at 10°C for 4 h. After that, the contact lens was removed from the well, the lens was cleaned by digital rubbing, and the lens was further left at rest overnight.
5) The contact lens was removed from the well and the lens was further cleaned by digital rubbing, and then its external appearance was observed with the naked eye and evaluated on the basis of the following judgment criteria. In addition, a micrograph of each lens is shown in FIG. 1.

[Criteria]

0: The lens is hardly observed to be white.
1: Only a part of the lens is observed to be white.
2: About 50% of the entirety of the lens is observed to be white.
3: The lens is observed to be white nearly throughout its entirety, but has low-turbidity parts in places.
4: The lens is observed to be white throughout its entirety.

<<Measurement of Tensile Modulus of Elasticity (Young's Modulus)>>

A produced contact lens was punched to produce a sample of a dumbbell shape having a stretched portion having a width of about 1.8 mm and a thickness of about 0.1 mm, which was used as a test sample. A tensile test was performed in saline at 20°C using Shimadzu Precision Universal Tester Autograph AG-IS MS-type manufactured by Shimadzu Corporation, and a Young's modulus (MPa) was calculated as a tensile modulus of elasticity from a stress-elongation curve. A tensile rate was set to 100 mm/min.

<<Measurement of Stress Relaxation Rate>>

A stress relaxation rate was measured using the same measurement instrument as that in the measurement of the tensile modulus of elasticity and such a jig as illustrated in FIG. **2.** Specifically, the central portion of a produced contact lens **C** was pushed in at a test force of 0.1 N in physiological saline using a pressurizing element **P** provided with a tip **PT** having a diameter of about 1.6 mm, and the stress relaxation rate (%) was calculated from a change in stress after the holding of the stroke for 1 minute.
As shown in FIG. **1,** the deposition of lipids is suppressed on each of the contact lenses of Examples as compared to the contact lenses of Comparative Examples. In addition, it is found that the contact lenses of Examples each have a Young's modulus and stress relaxation rate preferred as a contact lens, and hence can be excellent in handleability and wearing comfort.

<<Water Content Measurement>>

The water content of the contact lens obtained in Example 1-C was measured.
Specifically, water on the surface of a contact lens adjusted in a phosphate buffer at 20°C and a pH of 7.5 was lightly wiped off, and its weight (W (g)) in an equilibrium water-containing state was measured. After that, the lens was dried in a dryer set to 105°C, and then its weight ($W_0$ (g)) in a state of having left to cool was measured. With use of those measured values $W_0$ and W, a water content (wt%) was calculated in accordance with the following equation. As a result, the water content of the contact lens obtained in Example 1-C was 37% .

$$\text{Water content (wt\%)}=\{(W-W_0)/W\}\times 100$$

<<Measurement of Oxygen Permeability Coefficient (Dk Value) >>

The plate-type sample of a circular shape having a diameter of 14.0 mm obtained in Example 1-C was used as a measurement sample for measuring a Dk value.
Specifically, as a reference standard, a similar plate-type sample was produced using a material for "2WEEK Menicon Premio" (manufactured by Menicon Co., Ltd.), and the Dk value thereof was determined to be 129.
The measurement sample was set on an electrode. With use of a Seikaken-type film oxygen permeability meter (manufactured by Rika Seiki Kogyo Co., Ltd.), a current value at a time when an equilibrium state was achieved through nitrogen bubbling in physiological saline at 35°C was set as zero. Then, a current value at a time when an equilibrium state was achieved through oxygen bubbling was recorded. This procedure was similarly performed on the reference standard. The oxygen permeability coefficient of the lens was calculated in accordance with the following equation. The unit of the oxygen permeability coefficient is ($\times 10^{-11}$ ($cm^2$/sec) · ($mLO_2$/ (mL$\times$mmHg))=Barrer) . As a result, the Dk value of the measurement sample was 78 Barrer.

$$\text{Dk value}=R\times(IS/IR)\times(TS/TR)\times(PR/PS)$$

The meanings of the symbols in the equation are as described below.

R: The Dk value of the reference standard (129)
IS: The current value of the measurement sample (μA)
IR: The current value of the reference standard (μA)
TS: The average thickness of the measurement sample (mm)
TR: The average thickness of the reference standard (mm)
PS: Atmospheric pressure at the time of the measurement of the measurement sample (mmHg)
PR: Atmospheric pressure at the time of the measurement of the reference standard (mmHg)

Industrial Applicability

The ocular lens of the present invention is suitably used for an ocular lens, such as a contact lens, an artificial cornea, or a corneal onlay.

## Claims

1. An ocular lens, comprising a polymer material obtained by polymerizing a polymerizable composition containing, as monomer components, a siloxane monomer having a siloxane bond, and a siloxane-free crosslinkable monomer free of any siloxane bond,
wherein the siloxane-free crosslinkable monomer includes an alkylene glycol chain-containing crosslinkable monomer having:

    a chain moiety containing 6 or more alkylene glycol repeating units; and
    polymerizable groups arranged at both terminals of the chain moiety.

2. The ocular lens according to claim 1, wherein the chain moiety of the alkylene glycol chain-containing crosslinkable monomer contains 6 to 50 alkylene glycol repeating units.

3. The ocular lens according to claim 1 or 2, wherein the alkylene glycol repeating units include at least one kind selected from the group consisting of: an ethylene glycol repeating unit; a propylene glycol repeating unit; and a butylene glycol repeating unit.

4. The ocular lens according to any one of claims 1 to 3, wherein the polymerizable composition further contains a hydrophilic polymer.

5. The ocular lens according to any one of claims 1 to 4,

    wherein a blending ratio of the siloxane-free crosslinkable monomer with respect to a total blending amount of all monomer components and, if present, the hydrophilic polymer in the polymerizable composition is 2 wt% or more, and
    wherein a blending ratio of the alkylene glycol chain-containing crosslinkable monomer with respect to the total blending amount of all monomer components and, if present, the hydrophilic polymer in the polymerizable composition is 0.9 wt% or more.

6. The ocular lens according to any one of claims 1 to 5, wherein a blending ratio of the alkylene glycol chain-containing crosslinkable monomer with respect to a total blending amount of all monomer components and, if present, the hydrophilic polymer in the polymerizable composition is 2 wt% or more.

7. The ocular lens according to any one of claims 1 to 6, wherein a blending ratio of the alkylene glycol chain-containing crosslinkable monomer with respect to a total blending amount of all monomer components and, if present, the hydrophilic polymer in the polymerizable composition is from 3 wt% to 25 wt%.

8. The ocular lens according to any one of claims 1 to 7, wherein the alkylene glycol chain-containing crosslinkable monomer has an HLB value of from 5 to 20.

9. The ocular lens according to any one of claims 1 to 8, wherein a blending ratio of the siloxane monomer with respect

to a total blending amount of all monomer components and, if present, the hydrophilic polymer in the polymerizable composition is from 10 wt% to 70 wt%.

**10.** The ocular lens according to any one of claims 1 to 9, wherein the siloxane monomer has a single polymerizable group.

**11.** The ocular lens according to any one of claims 1 to 10, wherein a number of repetitions of the siloxane bond that the siloxane monomer has is 100 or less.

**12.** The ocular lens according to any one of claims 1 to 11, wherein a number of repetitions of the siloxane bond that the siloxane monomer has is 20 or less.

**13.** The ocular lens according to any one of claims 1 to 12, wherein the siloxane monomer has a weight average molecular weight of 10,000 or less.

**14.** The ocular lens according to any one of claims 1 to 13, wherein the siloxane monomer has a weight average molecular weight of 1,000 or less.

**15.** The ocular lens according to any one of claims 1 to 14,

wherein the siloxane monomer includes a siloxane monomer A having a weight average molecular weight of 1,000 or less, and a siloxane monomer B having a weight average molecular weight of more than 1,000, and wherein a ratio of the siloxane monomer B to a total of the siloxane monomer A and the siloxane monomer B is 20 wt% or less.

**16.** The ocular lens according to any one of claims 1 to 15, wherein the monomer component further contains a copolymerizable monomer.

**17.** The ocular lens according to claim 16, wherein the copolymerizable monomer includes at least one kind of hydrophilic monomer selected from a hydroxyl group-containing alkyl (meth)acrylate, (meth)acrylamide, an N-vinyl lactam, an N-methyl lactam, a methyl (meth)acrylate, and an alkoxyalkyl (meth)acrylate.

**18.** The ocular lens according to claim 16 or 17, wherein a blending ratio of the copolymerizable monomer with respect to the total blending amount of all monomer components and, if present, the hydrophilic polymer in the polymerizable composition is from 20 wt% to 70 wt%.

**19.** The ocular lens according to any one of claims 4 to 18, wherein the hydrophilic polymer contains at least one kind selected from poly-N-vinylpyrrolidone, a polyalkylene glycol, a polysaccharide, poly(meth)acrylic acid, and polyvinyl alcohol.

**20.** The ocular lens according to any one of claims 1 to 19, wherein the polymer material has a stress relaxation rate of from 10% to 40%.

**21.** The ocular lens according to any one of claims 1 to 20, wherein the polymer material has a Young's modulus of from 0.3 MPa to 2.3 MPa.

**22.** The ocular lens according to any one of claims 1 to 21, wherein the ocular lens is a contact lens.

FIG. 1

| EXPERIMENTAL EXAMPLE | LIPID DEPOSITION | | STRESS RELAXATION RATE (%) | YOUNG'S MODULUS (MPa) | EXPERIMENTAL EXAMPLE | LIPID DEPOSITION | | STRESS RELAXATION RATE (%) | YOUNG'S MODULUS (MPa) | EXPERIMENTAL EXAMPLE | LIPID DEPOSITION | | STRESS RELAXATION RATE (%) | YOUNG'S MODULUS (MPa) |
|---|---|---|---|---|---|---|---|---|---|---|---|---|---|---|
| | PHOTOGRAPH | JUDGMENT | | | | PHOTOGRAPH | JUDGMENT | | | | PHOTOGRAPH | JUDGMENT | | |
| COMPARATIVE EXAMPLE 1-A | 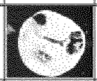 | 3 | 51.0 | 1.46 | COMPARATIVE EXAMPLE 2-A | 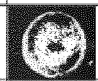 | 3 | 28.4 | 1.2 | COMPARATIVE EXAMPLE 3-A | 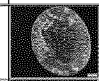 | 3 | 18.7 | 1.52 |
| COMPARATIVE EXAMPLE 1-B | 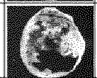 | 3 | 44.8 | 0.65 | COMPARATIVE EXAMPLE 2-B | 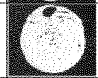 | 4 | 32.2 | 0.63 | COMPARATIVE EXAMPLE 3-B | 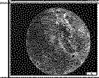 | 3 | 17.9 | 1.45 |
| EXAMPLE 1 – A | 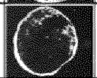 | 1 | 37.8 | 0.77 | EXAMPLE 2 – A | 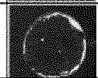 | 0 | 27.6 | 0.77 | EXAMPLE 3 – A | 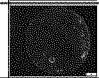 | 1 | 14.2 | 1.76 |
| EXAMPLE 1 – B | 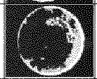 | 1 | 34.6 | 0.78 | EXAMPLE 2 – B | 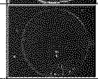 | 0 | 24.7 | 0.97 | EXAMPLE 3 – B | 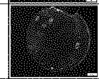 | 1 | 13.1 | 1.94 |
| EXAMPLE 1 – C | 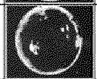 | 1 | 29.5 | 0.99 | EXAMPLE 2 – C | 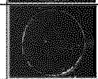 | 0 | 19.8 | 1.0 | EXAMPLE 3 – C | 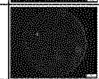 | 1 | 11.7 | 1.98 |
| EXAMPLE 1 – D | 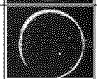 | 0 | 24.6 | 0.88 | EXAMPLE 2 – D | 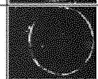 | 0 | 14.2 | 1.1 | EXAMPLE 3 – D | 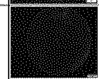 | 1 | 9.1 | 2.24 |
| EXAMPLE 1 – E | 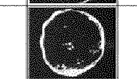 | 0 | 24.9 | 0.50 | EXAMPLE 2 – E | 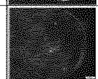 | 0 | 25.1 | 0.78 | EXAMPLE 3 – E | 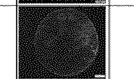 | 2 | 15.8 | 1.71 |
| EXAMPLE 1 – F | 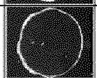 | 0 | 18.9 | 0.51 | EXAMPLE 2 – F | 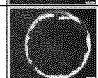 | 0 | 19.4 | 0.68 | EXAMPLE 4 – A | 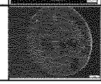 | 1 | – | – |
| EXAMPLE 1 – G | 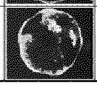 | 1 | 38.3 | 0.68 | EXAMPLE 2 – G | 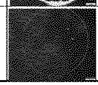 | 0 | 32.1 | 0.94 | | | | | |

FIG. 2

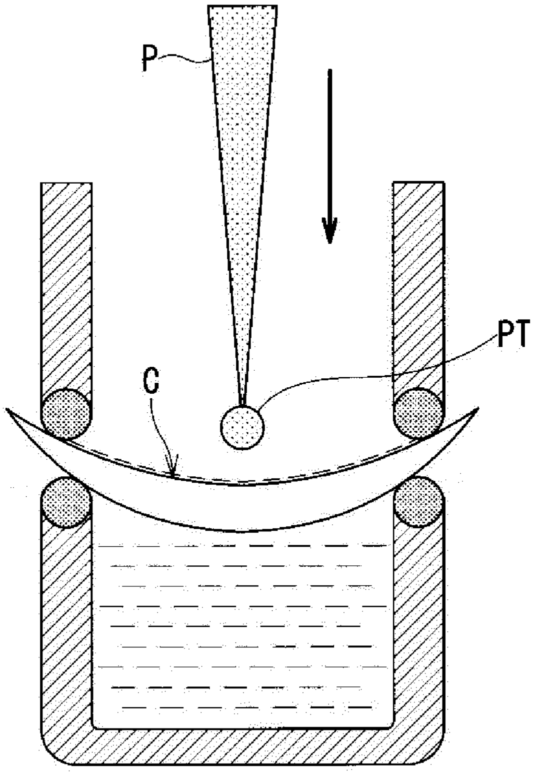

## INTERNATIONAL SEARCH REPORT

International application No. PCT/JP2020/032014

A. CLASSIFICATION OF SUBJECT MATTER
G02C 7/04(2006.01)i
FI: G02C7/04
According to International Patent Classification (IPC) or to both national classification and IPC

B. FIELDS SEARCHED
Minimum documentation searched (classification system followed by classification symbols)
G02C1/00-13/00; A61F2/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 8-507798 A (BAUSCH & LOMB INCORPORATED) 20 August 1996 (1996-08-20) claims, page 19, line 6 to page 20, line 7, page 21, line 11 to page 22, line 29, example 1 | 1-3<br>4-22 |
| X<br>Y<br>A | JP 10-509763 A (NOVARTIS AG) 22 September 1998 (1998-09-22) page 7, line 5 to page 11, line 15, examples 1-2, 12-14, 21 | 1-3<br>4-14, 16-22<br>15 |
| Y | JP 2010-508546 A (JOHNSON & JOHNSON VISION CARE, INC.) 18 March 2010 (2010-03-18) paragraphs [0002], [0047]-[0052], [0056] | 4-22 |
| Y | WO 2009/099164 A1 (ASAHI KASEI AIME CO., LTD.) 13 August 2009 (2009-08-13) paragraphs [0001], [0032], [0036], [0038] | 4-22 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 November 2020 (11.11.2020) | 24 November 2020 (24.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/032014

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-223158 A (SEED CO., LTD.) 01 October 2009 (2009-10-01) entire text | 1-22 |
| A | WO 2003/021336 A1 (TORAY INDUSTRIES, INC.) 13 March 2003 (2003-03-13) entire text | 1-22 |

Form PCT/ISA/210 (continuation of second sheet) (January 2015)

**INTERNATIONAL SEARCH REPORT**
Information on patent family members

International application No.
PCT/JP2020/032014

| Patent Documents referred in the Report | Publication Date | Patent Family | Publication Date |
|---|---|---|---|
| JP 8-507798 A | 20 Aug. 1996 | WO 1994/015980 A1 claims, page 9, line 15 to page 10, line 19, page 11, line 22 to page 13, line 16, example 1<br>US 5336797 A | |
| JP 10-509763 A | 22 Sep. 1998 | WO 1996/018122 A1 page 2, line 1 to page 5, line 25, examples 1-2, 12-14, 21<br>US 5770669 A<br>CN 1168723 A | |
| JP 2010-508546 A | 18 Mar. 2010 | US 2007/0138692 A1 paragraphs [0002], [0066]-[0071], [0075]<br>WO 2008/054667 A1<br>KR 10-2009-0091297 A<br>CN 101568857 A | |
| WO 2009/099164 A1 | 13 Aug. 2009 | EP 2241587 A1 paragraphs [0001], [0033], [0037], [0039]<br>US 2009/0234089 A1<br>CN 101932632 A<br>KR 10-2010-0106479 A | |
| JP 2009-223158 A | 01 Oct. 2009 | (Family: none) | |
| WO 2003/021336 A1 | 13 Mar. 2003 | US 2004/0198916 A1 entire text<br>JP 2001-233915 A<br>EP 1426809 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6433790 B
- JP 2015503631 A
- JP 2014040598 A
- WO 201592858 A1

### Non-patent literature cited in the description

- Japanese Pharmacopoeia